# EUROPÄISCHE PATENTANMELDUNG

(11) **EP 4 794 190 A1**
(43) Veröffentlichungstag der Anmeldung: **19.08.2026**
(21) Anmeldenummer: 25157763.1
(22) Anmeldetag: 13.02.2025
(51) Int. Cl.: H02P 23/26, A47J 9/00, H02M 1/42

(54) **BETREIBEN EINER KÜCHENMASCHINE**

(71) Anmelder: Vorwerk & Co. Interholding GmbH, 42275 Wuppertal (DE)
(72) Erfinder: SEIBT, Patrick, 40789 Monhein am Rhein (DE); ARNDT, Simon, 42929 Wermelskirchen (DE); HAUNSCHILD, Felix, 45133 Essen (DE)
(74) Vertreter: Von Rohr Patentanwälte Partnerschaft mbB

(57) **Zusammenfassung**

Die vorliegende Erfindung betrifft das Betreiben des Antriebs eines Rührwerks einer elektrisch betriebenen Küchenmaschine, wobei der Antrieb einen Elektromotor und einen Motorregler zur Regelung des Elektromotors, insbesondere seiner Rotordrehzahl oder Rotorposition, aufweist, wobei eine Zwischenkreisspannung für den Betrieb des Elektromotors mit einer PFC-Schaltung des Motorreglers bereitgestellt wird.

## Beschreibung

Die vorliegende Erfindung betrifft ein Verfahren zum Betrieb einer Küchenmaschine und eine Küchenmaschine, die zur Durchführung des Verfahrens ausgebildet ist.

Insbesondere betrifft die vorliegende Erfindung eine Küchenmaschine und den Antrieb des Rührwerks dieser zum Durchführen eines Zubereitungsvorgangs durch Erhitzen, Zerkleinern und/oder Mischen zur Herstellung eines Produkts, wie einer Speise oder eines Zwischenprodukts, aus Zutaten in einem Zubereitungsgefäß.

Besonders bevorzugt, jedoch nicht zwingend handelt es sich um eine Küchenmaschine, die gespeicherte Rezepte bereitstellt und ein zumindest teilautomatisiertes Durchführen von mehreren Schritten eines Rezeptes unterstützt.

Zu diesem Zweck weist die gattungsgemäße Küchenmaschine ein optionales Zubereitungsgefäß zur Aufnahme der Zutaten, ein elektrisches Heizsystem zum Erhitzen des Lebensmittels und/oder einen Rührer zum Kneten/Umrühren/Mischen und/oder Zerkleinern der Zutaten auf.

Antriebe für Rührwerke elektrisch betriebener Küchenmaschinen der in Rede stehenden Art weisen einen Elektromotor und einen Motorregler zur Regelung des Elektromotors auf. Unter der Regelung des Elektromotors ist bevorzugt die Regelung einer Rotorbewegung, also der Bewegung eines antreibbaren Rotors, des Elektromotors zu verstehen. Insbesondere ist der Motorregler zur Regelung einer Rotordrehzahl und/oder Rotorposition des Elektromotors bzw. seines Rotors ausgebildet.

Antriebe von Küchenmaschinen werden bisher insbesondere so ausgelegt, dass ein ausreichend hohes Drehmoment zum Kneten von Teig bereitgestellt wird. Oftmals wird eine Motordrehzahl hierfür mit einem Getriebe untersetzt. Elektromotoren werden im Ankerstellbereich betrieben. Hierdurch ist die maximale Drehzahl beschränkt und die Küchenmaschine letztlich für einen universellen Einsatz nur bedingt geeignet.

Küchenmaschinen im Sinne der vorliegenden Erfindung sind vorzugsweise zum Kneten von Teig geeignet. Bevorzugt werden durch Küchenmaschinen im Sinne der vorliegenden Erfindung jedenfalls auch Drehzahlen von unter 200 oder unter 100 Umdrehungen pro Minute und/oder Drehmomente von mehr als 5 Nm, 10 Nm, 20 Nm oder 50 Nm durch den Elektromotor bzw. über den Rührer bereitgestellt.

Elektromotoren, beispielsweise in Form von bürstenlosen Gleichstrommotoren (BLDC-Motoren) oder geschalteten Reluktanzmotoren (SR-Motoren), sind aus dem Stand der Technik für Antriebe von Küchenmaschinen bekannt. Sie weisen einen Ständer/Stator und einen relativ zum Stator rotierenden Läufer/Rotor auf.

Bei geschalteten Reluktanzmotoren, die bisher in Küchenmaschinen vorwiegend eingesetzt werden, ist der Stator mit Statorspulen bestückt, der Rotor weist jedoch keine Permanentmagnete oder Spulen auf, sondern besteht aus Elektroblech oder dergleichen. Das Drehmoment im Rotor wird hierbei ausschließlich durch die Reluktanzkraft erzeugt.

Bei bürstenlosen Gleichstrommotoren ist der Stator mit Statorspulen und der Rotor mit Permanentmagneten bestückt. Die Permanentmagnete können hierbei außen am Rotorkern (SPM - Surface Permanent Magnet) oder im Rotorkern vorgesehen bzw. eingebettet sein (IPM - Interior Permanent Magnet).

Grundsätzlich ist der Einsatz von modernen Motorkonzepten auch bei Küchenmaschinen bekannt. Beispielsweise wird in der EP 4 293 880 ein BLDC-Motor zum Einsatz in Küchenmaschinen beschrieben, der ein ausreichendes Drehmoment zum Kneten von Teig ermöglichen kann.

Antriebe von Standmixern wiederum arbeiten regelmäßig mit sehr hohen Drehzahlen zum Aufschlagen flüssiger Lebensmittel und zum Zerschlagen von Bestandteilen. Hier sind Getriebe im Hinblick auf die hohen Drehzahlen von beispielsweise mindestens 2500 Umdrehungen pro Minute tendenziell unüblich und ungeeignet; das begrenzte Drehmoment von Direktantrieben in Standmixern ist aufgrund der geringeren Viskosität der in der Regel flüssigen Lebensmittel in diesem Fall unkritisch. Aus Standmixern bekannte Direktantriebe sind nicht so ausgelegt, dass sie niedrige Drehzahlen oder hohe Drehmomente zum Kneten von Teig ermöglichen. Standmixer sind daher vorzugsweise keine Küchenmaschinen im Sinne der vorliegenden Erfindung.

Im Zusammenhang mit Küchenmaschinen sind Leistungsreserven wichtig, um auch hochviskose Zutaten bzw. Lebensmittel wie Teige verarbeiten oder eine hochaufschließende Zerkleinerung bei hohen Drehzahlen realisieren zu können. Bei leistungsfähigen Antrieben mit großem Drehzahlspektrum kann es hingegen vorkommen, dass zumindest in außergewöhnlichen Betriebssituationen Küchenmaschinen elektromagnetische Störungen verursachen.

Eine objektive technische Aufgabe der vorliegenden Erfindung liegt daher darin, ein Verfahren zum Betreiben einer Küchenmaschine, einen Antrieb, eine Küchenmaschine sowie ein Computerprogrammprodukt anzugeben, wodurch ein Betrieb der Küchenmaschine insbesondere in Grenzbereichen erweitert und störungsfrei erfolgen kann.

Die Aufgabe wird durch ein Verfahren gemäß Anspruch 1, einen Antrieb gemäß Anspruch 13, eine Küchenmaschine gemäß Anspruch 14 oder ein Computerprogrammprodukt gemäß Anspruch 15 gelöst. Vorteilhafte Weiterbildungen sind Gegenstand der Unteransprüche.

Ein Aspekt der vorliegenden Erfindung betrifft ein Verfahren zum Betreiben einer Küchenmaschine, insbesondere des Antriebs eines Rührwerks dieser, wobei der Antrieb einen Elektromotor und einen Motorregler zur Regelung des Elektromotors, insbesondere seiner Rotordrehzahl oder Rotorposition, aufweist.

Vorschlagsgemäß wird eine Zwischenkreisspannung für den Betrieb des Elektromotors mit einer bevorzugt aktiven PFC-Schaltung des Motorreglers bereitgestellt.

Eine PFC-Schaltung (Schaltung zur Power Factor Correction) ist dazu ausgebildet, die Stromaufnahme aus dem öffentlichen Stromnetz aktiv so anzupassen, dass sie zumindest im Wesentlichen sinusförmig und phasensynchron mit der Netzspannung ist. Dies erfolgt vorliegend bevorzugt durch aktive Bauelemente bzw. eine aktive Synchronisation basierend auf einer Regelung. Die PFC-Schaltung ist also vorzugsweise eine aktive PFC-Schaltung, im Folgenden auch nur PFC-Schaltung genannt.

Mit der PFC-Schaltung wird eine Gleichspannung (DC-Spannung) bereitgestellt, Zwischenkreisspannung genannt, die im Folgenden zur Bildung von Phasenströmen des Elektromotors zu dessen Antrieb verwendet wird. Die Bildung von Phasenströmen kann durch Kommutierung der Zwischenkreisspannung mit einem Wechselrichter erfolgen, der hierzu von dem Motorregler entsprechend angesteuert wird. Auf diese Weise kann der Elektromotor mit der PFC-Schaltung betrieben werden.

Die PFC-Schaltung ist vorzugsweise in ein Eingangsstromsystem der Küchenmaschine integriert, beispielsweise zwischen dem Netzanschluss bzw. der Gleichrichtung und dem Wechselrichter.

In der vorliegenden Erfindung ermöglicht der Einsatz der PFC-Schaltung insbesondere, die Zwischenkreisspannung stabil zu halten und/oder die Effizienz der gesamten Motorregelung zu steigern sowie Netzprobleme zu vermeiden. Dies kann erreicht werden, indem anstelle eines rein passiven Elements zur Gleichrichtung bzw. Glättung von Strömen (wie einer großen, ungeregelten Induktivität) ein aktiver Aufbau verwendet wird, der beispielsweise auf einem Boost-Konverter basieren kann und dessen Stromaufnahme mit der Netzfrequenz synchronisiert wird oder ist.

PFC-Schaltungen haben sich bei Küchenmaschinen bzw. bei deren Antrieben als überraschend vorteilhaft erwiesen, da durch die Stromaufnahmecharakteristik Netzstörungen vermieden und gleichzeitig eine zuverlässige Stromversorgung auch von Elektromotoren mit modernen Konzepten ermöglicht wird, die eine hohe Leistung und Dynamik erlauben.

Insbesondere hat sich die Verwendung der PFC-Schaltung zum Betrieb einer Drehfeldmaschine, einem bürstenlosen Gleichstrommotor - BLDC-Motor - oder elektrisch kommutierten, permanenterregten Synchronmotor als Elektromotor (zum Antrieb eines Rührers, wie einem Messer oder sonstigen Werkzeugs) als besonders vorteilhaft erwiesen.

Denn diese Kombination zeigt sich in überraschender Weise als besonders vorteilhaft bei einem Einsatz in Küchenmaschinen bzw. Antrieben von Rührwerken hierfür. Neben der Vermeidung von Netzstörungen bietet die Kombination außergewöhnlich performante Antriebscharakteristika bei gleichzeitig hoher Effizienz und geringem Platzbedarf, was gerade bei Küchenmaschinen vorteilhaft ist.

Grundsätzlich kommt jedoch auch der Einsatz einer PFC-Schaltung in Kombination mit DC-Motoren oder anderen Motorkonzepten, die ausgehend von einer DC-Spannung betreibbar sind oder betrieben werden, zum Einsatz in Küchenmaschinen in Betracht.

In einem ganz besonders bevorzugten Aspekt der vorliegenden Erfindung wird die Zwischenkreisspannung durch Einstellung der PFC-Schaltung verändert. Hierzu kann die PFC-Schaltung rückgekoppelt sein oder werden und die Zwischenkreisspannung kann hierbei verändert werden, indem die Rückkopplung beeinflusst wird.

Die Einstellbarkeit der Zwischenkreisspannung (hinsichtlich des DC-Spannungslevels) ermöglicht es in vorteilhafter Weise die Anwendungsbereiche der Küchenmaschine zu erweitern. Insbesondere ermöglicht die wahlweise bzw. zeitweilige Reduktion der Zwischenkreisspannung die Reduktion der minimal erreichbaren Drehzahl des Rührers und damit Arbeitsweisen zum besonders schonenden Bearbeiten von Zutaten.

Eine grundsätzliche Reduktion der Zwischenkreisspannung hingegen würde maximal mögliche Drehzahlen und Drehmomente reduzieren. Die Einstellbarkeit der Zwischenkreisspannung über die Konfigurationsänderung der PFC-Schaltung, insbesondere dynamisch und/oder zur Laufzeit der Küchenmaschine, erweitert also letztlich den abgedeckten Drehzahlbereich. Hierbei ist es in vorteilhafter Weise möglich, die Pulsweitenmodulationsfrequenz zur Ansteuerung eines Wechselrichters zwecks Erzeugung der Phasenströme unverändert zu belassen, also insbesondre nicht zu erhöhen, was wiederum Netzstörungen und Abstrahlungen begünstigen würde.

Die Zwischenkreisspannung wird vorzugsweise durch die PFC-Schaltung geregelt, wobei die Regelung auf einer von der Zwischenkreisspannung abgeleiteten Regeleingangsgröße basiert und wobei die Zwischenkreisspannung durch Beeinflussung der Regeleingangsgröße der PFC-Schaltung verändert wird.

Weiter kann die PFC-Schaltung eine PWM-Schaltung (Schaltung zur Pulsweitenmodulation) zur Erzeugung der Zwischenkreisspannung aufweisen. Die Zwischenkreisspannung korrespondiert in diesem Fall zu einem Tastverhältnis der PWM-Schaltung, wobei das Tastverhältnis der PWM-Schaltung mit einer Regeleingangsgröße geregelt wird.

Die Regeleingangsgröße ist vorzugsweise vom Verlauf der Zwischenkreisspannung geprägt und ein Mittelwert dieser wird eingestellt oder verändert. Dies führt zu einer entsprechenden Änderung der Zwischenkreisspannung. Eine Trägerfrequenz der PWM-Schaltung kann dabei unverändert bleiben.

Die Regeleingangsgröße kann durch Teilen der Zwischenkreisspannung mit einem einstellbaren Verhältnis erzeugt werden. Durch eine Veränderung des Verhältnisses kann die Zwischenkreisspannung entsprechend eingestellt oder verändert werden.

Bevorzugt ist ein Spannungsteiler vorgesehen, wobei das Verhältnis von Widerständen eines Spannungsteilers verändert wird. Der Spannungsteiler kann hierzu zwei in Reihe geschaltete Widerstände aufweisen, über die die Zwischenkreisspannung abfällt, sodass sich an einem Mittelabgriff des Spannungsteilers eine in einem Verhältnis geteilte Zwischenkreisspannung als Rückkoppelspannung bzw. Regeleingangsgröße für die PFC-Schaltung einstellt.

Der Spannungsteiler kann eine Reihenschaltung eines Schalters mit einem weiteren Widerstand aufweisen, die mit dem Spannungsteiler so gekoppelt ist, dass durch Schließen des Schalters das Verhältnis geändert wird. Beispielsweise ist der Schalter durch einen Transistor, insbesondere MOSFET, realisiert.

Es ist bevorzugt, dass die PFC bei niedrigen Drehzahlen bzw. im Ankerstellbereich des Elektromotors deaktiviert wird oder ist. Hierdurch kann die Eingangsspannung (des Wechselrichters zur Erzeugung der Phasenströme) gezielt abgesenkt werden. Dies wiederum kann in vorteilhafter Weise eine Reduktion des Spannungshubs und der maximal möglichen Stellgröße bzw. der maximal möglichen Phasenspannung ermöglichen.

Die Deaktivierung der PFC bei niedrigen Drehzahlen bzw. im Ankerstellbereich, insbesondere von Küchenmaschinen, kann auch unabhängig von den weiteren Aspekten der vorliegenden Erfindung einen eigenständigen Erfindungsgedanken darstellen.

Bei niedrigen Drehzahlen des Elektromotors kann die Regeleingangsgröße von der Zwischenkreisspannung unabhängig sein und/oder als Referenzgröße fest vorgegeben werden. Eine Deaktivierung der PFC-Schaltung kann auf diese Weise erfolgen, da das Wirkprinzip der PFC-Schaltung dadurch deaktiviert wird, die Zwischenkreisspannung also ohne Power Factor Correction erzeugt wird.

Die PFC-Schaltung kann einen Hochsetzsteller, insbesondere Boost-Converter, einen Buck-Converter oder einen Buck-Boost-Converter, aufweisen oder bilden, mit dem die Zwischenkreisspannung erzeugt wird.

Vorzugsweise wird ein von dem Antrieb abgedecktes Drehzahlspektrum durch die Einstellung der PFC-Schaltung geändert bzw. erweitert. Durch die Änderung der Einstellung der PFC-Schaltung können in vorteilhafter Weise verringerte Minimalwerte und/oder vergrößerte Maximalwerte einer oder mehrerer mit der Zwischenkreisspannung gebildeter Spannungen und/oder Ströme zur Versorgung des Elektromotors ermöglicht werden. Der Anwendungsbereich der Küchenmaschine kann hierdurch also erweitert werden.

Die PFC-Schaltung kann in Abhängigkeit von einem Soll-Betriebsparameter, insbesondere einer Soll-Drehzahl, automatisch unterschiedlich eingestellt werden. Bedarfsweise wird bei Verringerung der Soll-Drehzahl die PFC-Schaltung automatisch so eingestellt, dass eine Reduktion der Zwischenkreisspannung bewirkt wird.

Vorzugsweise kann die PFC-Schaltung in Abhängigkeit von einem Rezept, einem Betriebsmodus, beispielsweise einem Teigmodus oder Reinigungsmodus, und/oder einer Benutzereingabe, unterschiedlich eingestellt werden, insbesondere automatisch.

Zudem kann die PFC-Schaltung vorzugsweise in Abhängigkeit von einem Vorhandensein oder einer Bauform eines (Zubereitungs-)Gefäßes der Küchenmaschine unterschiedlich eingestellt werden, insbesondere automatisch. Ferner kann die PFC-Schaltung vorzugsweise in Abhängigkeit von einem Vorhandensein oder einer Erkennung eines Zubehörteils und/oder einem Vorhandensein und/oder einer Aktivität eines Funktionsmoduls der Küchenmaschine unterschiedlich eingestellt werden, insbesondere automatisch. Die Erkennung (des Vorhandenseins) des Gefäßes, des Zubehörteils und/oder des Funktionsmoduls kann automatisch oder durch eine Benutzereingabe erfolgen.

Vorzugsweise kann die PFC-Schaltung in Abhängigkeit von einem Betriebsparameter der Küchenmaschine und/oder eines (Zubereitungs-)Gefäßes der Küchenmaschine und/oder eines Zubehörteils und/oder eines Funktionsmoduls eingestellt werden, insbesondere automatisch. Betriebsparameter können erfassbare, insbesondere sensorisch durch die Küchenmaschine mittelbare oder unmittelbare erfassbare physikalische Größen sein. Für die Erfassung des Betriebsparameters verfügt die Küchenmaschine über zumindest eine Erfassungseinrichtung, insbesondere eine Sensorik und/oder eine digitale und/oder eine analoge Verarbeitungseinheit.

Betriebsparameter im Zusammenhang einer Küchenmaschine können einzeln oder in Kombination sein: Zeit, Temperatur, Drehzahl, Drehmoment und/oder Gewicht. Weiter erläuternde Beispiele für diese Betriebsparameter seien hier genannt (einzeln oder in Kombination): die aktuelle Zeit zur Durchführung eines Rezepts; die Heizungstemperatur; die Garguttemperatur; das Motordrehmoment; die eingestellte und/oder aktuelle Drehzahl des Mixmessers; das Gewicht von Gargut und/oder das Gewicht von Zubehörteilen oder Funktionsmodulen.

Eine Rückspeisung von aus Rotationsenergie des Elektromotors gewonnener elektrischer Energie in einen durch den Ausgang der PFC-Schaltung gebildeten Zwischenkreis kann erfolgen, nachdem durch Einstellung der PFC-Schaltung die Zwischenkreisspannung des Zwischenkreises gesenkt worden ist.

Dies ermöglicht eine verbesserte Bremswirkung, insbesondere da ein Zwischenkreis-Energiespeicher, insbesondere Kondensator, teilweise entleert wird und daher mehr freie Kapazität zur Aufnahme von Energie zwecks Erzeugung von Bremswirkung aufweist.

Ein weiterer, auch unabhängig realisierbarer Aspekt der vorliegenden Erfindung betrifft den Antrieb aufweisend den Elektromotor und den Motorregler zur Regelung des Elektromotors, insbesondere zur Regelung seiner Rotordrehzahl oder Rotorposition, wobei der Antrieb zur Durchführung des vorschlagsgemäßen Verfahrens ausgebildet ist.

Ein weiterer, auch unabhängig realisierbarer Aspekt der vorliegenden Erfindung betrifft die Küchenmaschine aufweisend ein mit dem Antrieb angetriebenes Rührwerk, die zur Durchführung des vorschlagsgemäßen Verfahrens ausgebildet ist.

Ein weiterer, auch unabhängig realisierbarer Aspekt der vorliegenden Erfindung betrifft ein Computerprogrammprodukt oder nichtflüchtiges Speichermedium umfassend Befehle, die bewirken, dass der vorschlagsgemäße Antrieb oder die vorschlagsgemäße Küchenmaschine das vorschlagsgemäße Verfahren ausführen. Insbesondere bewirken die Befehle die Durchführung des vorschlagsgemäßen Verfahrens, wenn sie mit einem Motorregler des Antriebs der Küchenmaschine ausgeführt werden.

Zusammenfassend kann festgehalten werden:
- Die Power Factor Correction ist vorzugsweise zum Variieren einer minimalen Drehzahl des Elektromotors 1 in einem Einstellbereich einstellbar. Eine Einstellung auf 0 U/min ist durch Einstellung der PFC hingegen vorzugsweise nicht möglich.
- Die Einstellung der PFC kann durch den Motorregler gesteuert werden. Die Einstellung der PFC-Schaltung kann also vorzugsweise durch die Motorregelung 42 verändert bzw. die Rückkopplung beeinflusst werden.
- Die Zwischenkreisspannung wird vorzugsweise angepasst, vorzugsweise durch den Eingriff in den Feedbackpfad eines Boostconverters und/oder Buckconverters, weiter bevorzugt durch Einstellung/Beeinflussung (z.B. via eines Transistors) der Feedbackspannung. Die Feedbackspannung kann z.B. aus einem Spannungsteiler am Zwischenkreis stammen.
- Die Einstellung/Beeinflussung kann via eines Transistors vorgenommen werden. Alternative oder zusätzlich kann eine andere Spannung aufgeprägt werden (Manipulationsspannung), eine andere Spannung kann überlagert werden, ein Widerstandarray und/oder ein Operationsverstärker kann verwendet werden.
- Vorzugsweise wird bei gleichbleibender PWM-Trägerfrequenz der minimal stellbare Spannungsvektor variiert oder ist variierbar.
- Durch Erhöhung der Zwischenkreisspannung kann die Rotorgeschwindigkeit erhöht werden und/oder bei Reduktion der Zwischenkreisspannung die Rotorgeschwindigkeit reduziert werden.
- Die Power Factor Correction kann bei niedrigen Drehzahlen oder im Ankerstellbereich des Elektromotors deaktivierbar sein oder deaktiviert werden oder ist deaktiviert, wobei die Deaktivierung ein Teil des Einstellbereiches der PFC darstellen kann.
- Die PFC kann stellbar gemacht werden. Somit kann die Zwischenkreisspannung angepasst werden. Dies bedeutet, dass bei gleichbleibender PWM-Trägerfrequenz, der minimal stellbare Spannungsvektor variiert werden kann. Dies bedeutet, dass eine kleinste einstellbare Rotationsgeschwindigkeit des Rotors variiert werden kann. Bei Erhöhung der Zwischenkreisspannung kann die Rotorgeschwindigkeit erhöht werden, bei Reduktion der Zwischenkreisspannung kann die Rotorgeschwindigkeit reduziert werden.
- Die Stellbarkeit der PFC ermöglicht ferner, dass der energetische Zwischenkreispuffer im Bremsbetrieb eingestellt werden kann. Zur Abbremsung des Rotors kann der Puffer erhöht werden. Dies muss vor Beginn der Abbremsung geschehen. Anwendungsfall: Unterschiedliche Abbremsung in unterschiedlichen Modi (z.B. Cleaning Mode oder Teig Kneten).

Die vorliegende Erfindung steht auch im Kontext der Änderung einer Regeldynamik des Motorreglers. Dieser Aspekt ist vorteilhaft kombinierbar mit den vorgenannten Aspekten der vorliegenden Erfindung, die jedoch auch unabhängig von folgenden Aspekten betreffend die Regeldynamik realisiert werden können und vorteilhaft sind.

Die im Folgenden näher erläuterte Änderbarkeit der Regeldynamik und die Anpassung dieser an die Zutaten können unmittelbar oder mittelbar dazu verwendet werden, die Änderung der Zwischenkreisspannung in der zuvor und im Folgenden beschriebenen Weise zu triggern.

Optional weist der Motorregler des Antriebs einen Dynamikparametereingang auf. Über den Dynamikparametereingang ist dem Motorregler ein Dynamikparameter vorgebbar. Der Motorregler ist dazu ausgebildet, durch Änderung des Dynamikparameters, der am Dynamikparametereingang vorgegeben ist bzw. anliegt, sein Regelverhalten zu ändern.

Der Dynamikparameter oder eine hierzu korrespondierend oder hiervon abgeleitete Größe kann unmittelbar oder mittelbar (auch) dazu verwendet werden, um die Einstellung der PFC-Schaltung und/oder hierdurch die Zwischenkreisspannung zu verändern.

Es hat sich nämlich gezeigt, dass ein verbesserter Einfluss auf die Konsistenz des Produkts, also der Speise oder des Zwischenprodukts, wünschenswert ist, insbesondere um ein grobes oder zu feines Ergebnis - je nach Speise oder Zutaten - zu vermeiden.

Durch das einstellbare Regelverhalten kann in vorteilhafter Weise beeinflusst werden, wie der Antrieb bzw. der Elektromotor und damit auch der hiermit antreibbare Rührer, der in dem Zubereitungsgefäß der Küchenmaschine angeordnet ist, durch den Elektromotor bzw. Antrieb drehbar ist, anläuft oder auf Lastwechsel reagiert. Gleichzeitig kann die Zwischenkreisspannung angepasst werden, um entsprechende Regelverhalten zu unterstützen bzw. der Antriebssteuerung vorteilhafte Randbedingungen in Form einer höheren oder niedrigeren Zwischenkreisspannung zur Verfügung zu stellen.

Insbesondere kann beeinflusst werden, wie (schnell) der Rührer beschleunigt wird, beispielsweise aus einer Ruheposition, und/oder wie (schnell) sein Drehmoment verändert wird, insbesondere zum Halten, Erreichen oder Wiederherstellen einer Soll-Drehzahl.

Besonders bevorzugt führt eine Änderung des Dynamikparameters am Dynamikparametereingang zu einer Änderung einer Rotor-Drehmoment-Änderungs-Charakteristik des Motorreglers. Mit anderen Worten kann der Dynamikparameter vorgeben, in welcher Art und Weise, insbesondere Geschwindigkeit, der Motorregler das Drehmoment des Elektromotors, insbesondere bei Lastwechseln und/oder Änderungen der Soll-Drehzahl oder eines anderen Betriebsparameters des Elektromotors, nachregelt.

Im Fall hoher eingestellter Dynamik bzw. schnell eingestelltem Motorregler kann die Zwischenkreisspannung beispielsweise erhöht sein oder werden, im Vergleich zu dem Fall geringer Dynamik bzw. langsamer eingestelltem Motorregler. Die Dynamik kann also eingestellt werden und die Einstellung der PFC-Schaltung hängt davon ab oder folgt dieser.

Letztlich lassen sich unterschiedliche Zubereitungsvorgänge mit derselben Küchenmaschine erreichen. Denn mittels des Dynamikparameters kann eingestellt werden, ob Zutaten im Zubereitungsgefäß durch einen allmählich beschleunigten Rührer bzw. Rührer mit allmählicher Drehmomentzunahme schonend bewegt oder beschleunigt werden oder ob Zutaten im Zubereitungsgefäß durch einen abrupt beschleunigten Rührer bzw. Rührer mit abrupter Drehmomentzunahme zerkleinert, insbesondere zerschlagen, werden. Dies kann durch die Variation der Zwischenkreisspannung unterstützt oder sogar erst im vollen Umfang ermöglicht werden.

In einem weiteren Aspekt der vorliegenden Erfindung wird die bevorzugt einstellbare PFC-Schaltung in einem Verfahren zum Betrieb einer Küchenmaschine verwendet, deren Rührer mit einem elektronisch kommutierten Elektromotor angetrieben wird, der im Feldschwächbereich, insbesondere zweiten Feldschwächbereich, betrieben wird.

Üblicherweise werden Elektromotoren nur im Ankerstellbereich bzw. bis zur Nenndrehzahl betrieben. Diese Drehzahlen liegen in der Regel allenfalls bei wenigen hundert Umdrehungen pro Minute, wenn mit klassischen Konzepten und ausreichend kompakten Bauformen die Drehmomente erreicht werden sollen, die insbesondere bei Direktantrieb zum Kneten von Teig erforderlich sind.

Die Erfindung geht hier einen anderen Weg, indem beim Antrieb einer Küchenmaschine elektronisch kommutierte Elektromotoren, insbesondere BLDC-Motoren (Brushless DC Motoren) oder PMSM (Permanent Magnet Synchronous Motoren) mit Feldschwächung zur Erweiterung des Drehzahlbereichs über die Nenndrehzahl hinaus eingesetzt werden.

Der Ankerstellbereich (Grundbereich) ist hierbei vorzugsweise der (Drehzahl-)Bereich, in dem der Elektromotor mit voller (Zwischenkreis-)Spannung bzw. mit konstantem magnetischem Fluss betrieben wird bzw. ohne Notwendigkeit einer Feldschwächung betrieben werden kann. Der Elektromotor wird hierbei mit konstantem bzw. maximalem Drehmoment betrieben. Die maximale Drehzahl im Ankerstellbereich wird durch die Nenndrehzahl des Elektromotors begrenzt.

Der Feldschwächbereich schließt sich an den Ankerstellbereich an. Im Feldschwächbereich wird der magnetische Fluss gezielt reduziert, also eine Feldschwächung eingesetzt. Hierdurch können (höhere) Drehzahlen erreicht werden, die über die Nenndrehzahl hinaus gehen. Das Drehmoment ist im Feldschwächbereich gegenüber dem Ankerstellbereich reduziert, nimmt insbesondere im Feldschwächbereich mit zunehmender Drehzahl ab.

Da mit Eintritt in den Feldschwächbereich eine Abnahme des im Ankerstellbereich zumindest im Wesentlichen konstanten Drehmoments verbunden ist, wurde der Feldschwächbereich bisher bei Antrieben für Küchenmaschinen vermieden.

Es werden grundsätzlich zwei Feldschwächbereiche unterschieden, die durch spezifische Anpassungen der Strom- und Spannungsregelung charakterisiert sind.

Im ersten Feldschwächbereich kann die Drehzahl über die Nenndrehzahl erhöht werden. In diesem Bereich kann die verfügbare Betriebsspannung vollständig genutzt werden. Die Phasenströme bleiben dabei vorzugsweise nahezu sinusförmig, während ihre Amplitude aufgrund der höheren induktiven Reaktanz des Elektromotors reduziert wird. Gleichzeitig erfolgt vorzugsweise eine Modulation der Phasenspannungen.

Vorschlagsgemäß wird der Elektromotor vorzugsweise zumindest auch im zweiten Feldschwächbereich betrieben bzw. die Küchenmaschine ist dazu ausgelegt. Hierbei wird die Drehzahl ausgehend vom ersten Feldschwächbereich weiter gesteigert, indem der magnetische Fluss des Elektromotors gezielt reduziert wird. Die Phasenspannungen können hierbei nahezu unverändert bleiben, da sie üblicherweise durch die Betriebsspannung des Wechselrichters begrenzt sind. Die Phasenströme können hingegen deutliche Verzerrungen aufweisen, die vorzugsweise durch eine bewusste Verschiebung des Stromwinkels, eine Reduktion der Stromamplitude und/oder eine aktive Kompensation der Gegen-EMK (elektromagnetische Kraft) entstehen.

Der zweite Feldschwächbereich im Sinne der vorliegenden Erfindung ist bevorzugt dadurch gekennzeichnet, dass die Gegen-EMK die Betriebsspannung des die Phasen des Elektromotors speisenden Wechselrichters erreicht oder überschreitet. Die Phasenspannung kann daher nicht mehr frei gesteuert werden, da sie durch die Betriebsspannung begrenzt ist. Der Stromwinkel wird daher vorzugsweise aktiv angepasst, um die Gegen-EMK zu kompensieren und dennoch ein nutzbares Drehmoment zu erzeugen. Alternativ oder zusätzlich werden die Phasenströme zunehmend verzerrt. Die Schaltfrequenz einer PWM (Puls-Weiten-Modulation) zur Steuerung des Wechselrichters bzw. Erzeugung der Phasenspannung wird oder ist ggf. erhöht, um die Regelbarkeit bei hohen Drehzahlen aufrechtzuerhalten.

Der Betrieb im zweiten Feldschwächbereich erfordert es, bei der Drehzahlerhöhung ausgehend vom Ankerstellbereich (Stillstand und an Stillstand grenzende, niedrigere Drehzahlen) zunächst den ersten Feldschwächbereich zu durchlaufen. Bereits ein Betrieb im ersten Feldschwächbereich wurde bisher bei Küchenmaschinen vermieden. In überraschender Weise hat sich jedoch gezeigt, dass Küchenmaschinen-Anwendungen, die eine höhere Drehzahl erfordern, üblicherweise mit geringeren Drehmomenten auskommen. Das Drehmoment reduziert sich bei einer vorschlagsgemäßen Motorregelung in einer Weise, die selbst den Einsatz im zweiten Feldschwächbereich unerwartet gut nutzbar erscheinen lässt.

Entgegen bisherigen Vorurteilen ist also eine Vermeidung des Feldschwächbereichs und insbesondere des zweiten Feldschwächbereichs nicht nötig, sondern deren Nutzung ermöglicht ein erweitertes Anwendungsspektrum der Küchenmaschine trotz weiterhin kompaktem, bei niedrigeren Drehzahlen ausreichend kräftigem Antrieb.

Somit hat sich herausgestellt, dass ein Betrieb über den ersten Feldschwächbereich hinaus bis in den zweiten Feldschwächbereich dazu führt, dass ein Elektromotor, der bei niedrigen Drehzahlen im Ankerstellbereich zum Kneten von Teig geeignete Drehmomente bereitstellt, bei niedrigeren, aber ausreichenden Drehmomenten höchste Drehzahlen zum Zerkleinern, Aufschlagen und/oder Homogenisieren von Lebensmitteln bereitstellen kann.

An dieser Stelle ist die Einstellbarkeit der PFC-Schaltung ebenfalls vorteilhaft. Denn mit ihr kann die Zwischenkreisspannung variiert werden, was einerseits - durch Reduktion dieser - eine Erweiterung des Drehzahlspektrums im Ankerstellbereich hin zu geringeren Drehzahlen als auch eine erhöhte Zwischenkreisspannung zum stabilen Betrieb im Feldschwächbereich ermöglicht.

Im Ergebnis ermöglicht die vorliegende Erfindung durch die Nutzung eines elektrisch kommutierten Elektromotors und besonders bevorzugt BLDC- oder PMSM-Motors bis in den insbesondere zweiten Feldschwächbereich also einen universelleren Einsatz von Küchenmaschinen, die zum Kneten von Teig geeignet sind, bis hin zu extrem hohen Drehzahlen wie mehr als 10.000 Umdrehungen pro Minute, um auch das Zerkleinern, Aufschlagen und/oder Homogenisieren von Lebensmitteln zu ermöglichen, was bisher Standmixern oder Pürierstäben vorbehalten war.

Der Elektromotor wird oder ist besonders bevorzugt vektorbasiert geregelt. Eine vektorbasierte Regelung, insbesondere FOC - Field Oriented Control, ist eine fortgeschrittene Steuerungsmethode, die oft bei anspruchsvolleren Anwendungen eingesetzt wird. Vorzugsweise wird die Rotorposition kontinuierlich überwacht, typischerweise mit Encodern, Resolvern, Hallsensoren, optischen Sensoren wie Lichtschranken oder anderen Sensoren. Die Ströme in den Phasen werden bevorzugt zumindest im Wesentlichen sinusförmig moduliert. Die Regelung der Phasenströme erfolgt vorzugsweise im d-q-Koordinatensystem (rotierendes Koordinatensystem). Letztlich wird vorzugsweise das Drehmoment direkt kontrolliert, indem der magnetische Fluss (d-Komponente) und das erzeugte Drehmoment (q-Komponente) getrennt geregelt werden.

Durch die vektorbasierte Motorregelung, insbesondere FOC, ist eine präzise Regelung von Drehmoment, Drehzahl und Position möglich und es kann, besonders bei wechselnden Lastbedingungen, eine höhere Effizienz sowie eine sanftere und leisere Motorbewegung erreicht werden. Insbesondere ermöglicht die vektorbasierte Regelung jedoch einen zuverlässigen Betrieb des Elektromotors im zweiten Feldschwächbereich gerade bei sehr hohen Drehzahlen, in der eine präzise, schnelle Motorregelung die bereits beschriebene Drehzahlerhöhung eröffnet.

Wie bereits erwähnt, ist der Elektromotor, mit dem der Rührer angetrieben wird, vorzugsweise ein bürstenloser Gleichstrommotor (BLDC) oder Permanentmagnet-Synchronmotor (PMSM). BLDC und PMSM ähneln sich konstruktiv und in der Regelung, sodass die Begriffe hier synonym zu verstehen sind, wenn nichts Gegenteiliges erläutert ist oder sich aus dem Zusammenhang ergibt.

Der Elektromotor weist vorzugsweise vier bis sechs Pole und/oder 10 bis 16 Statorschlitze auf. Es hat sich gezeigt, dass die für Küchenmaschinen benötigten Drehmomente und gewünschten Drehzahlen hierbei mit einer kompakten Konstruktion ermöglicht werden können.

Zudem ist der Elektromotor bevorzugt im Links- und Rechtslauf betreibbar oder wird so betrieben. Gerade bei kleineren Drehzahlen und insbesondere zum effizienten Kneten von Teigen hat es sich als vorteilhaft erwiesen, die Drehrichtung wechseln zu können. Der BLDC- bzw. PMSM-Motor bietet die Möglichkeit von Links- und Rechtslauf, nachdem die Regelung dies unterstützt, und die vorschlagsgemäße Küchenmaschine ist vorzugsweise ebenfalls entsprechend konfigurierbar, um im Betrieb, beispielsweise bei entsprechenden Programmen und Rezepten, die Drehrichtung (temporär) zu ändern.

Wie bereits erwähnt, wird oder ist der Rührer durch den Elektromotor vorzugsweise direkt bzw. getriebelos angetrieben. Dies steigert die Zuverlässigkeit, nachdem Getriebe oft anfällig sind, reduziert die Geräuschentwicklung, nachdem Schwingungen vermieden werden, und ermöglicht auch die hohen Drehzahlen durch den Betrieb des Elektromotors im zweiten Feldschwächbereich, die mit einer Getriebeuntersetzung kaum möglich wären.

Vorzugsweise wird die Gegen-EMK (elektromagnetische Kraft) des Elektromotors überwacht. Dies ermöglicht eine Anpassung der Regelung, um bei höheren Drehzahlen einen effektiven und effizienten Betrieb zu erreichen.

Bei Erkennung einer zu großen Gegen-EMK kann ein Stromwinkel zwischen Phasenströmen und einem Rotorfluss aktiv angepasst werden. Alternativ oder zusätzlich können Phasenströme moduliert und/oder reduziert werden. Hierdurch kann ein magnetischer Fluss eines Rotors des Elektromotors begrenzt oder reduziert werden, insbesondere bevor das Risiko einer Entmagnetisierung oder Ummagnetisierung der Permanentmagnete des Rotors entsteht.

Weiter kann der Elektromotor mit Phasenströmen und/oder Phasenspannungen betrieben werden, die mit einem Modulationsverfahren höherer Ordnung, insbesondere einer Space Vector Modulation (SVM), bevorzugt mit trapezförmiger Nullsequenz, erzeugt werden. Statt direkt sinusförmige Signale zu erzeugen, verwendet SVM sogenannte Raumvektoren (Space Vectors), die durch Kombination der Schaltzustände der Wechselrichtertransistoren gebildet werden. Die SVM kann durch Veränderung der Zwischenkreisspannung mit der PFC-Schaltung verbessert werden. Insbesondere wird ihr Arbeitsbereich erweitert. So kann durch die PFC-Schaltung die Zwischenkreisspannung abgesenkt werden, was es der SVM ermöglicht, kleinere Vektoren zu erzeugen. Die PFC-Schaltung kann hierzu vom Motorregler entsprechend eingestellt werden. Die SVM kann also bei oder zur Erzeugung kürzerer Vektoren die PFC-Schaltung so einstellen, dass die Zwischenkreisspannung abgesenkt wird oder ist.

Vorzugsweise wird der Elektromotor basierend auf einem oder mehreren Sensorwerten korrespondierend zu einer absoluten Rotorposition, zu einem oder mehreren Strangströmen des Elektromotors, zu einer Zwischenkreisspannung des Elektromotors, und/oder zu einer Motortemperatur, als Eingangsgrößen für ein den Elektromotor regelndes Regelverfahren und/oder unter Berücksichtigung von Parametern korrespondierend zu einem Massenträgheitsmoment, einem oder mehreren Spulenwiderständen, einem oder mehreren Induktivitätswerten und/oder einer Flussverkettung von Permanentmagneten des Rotors geregelt.

Einer oder mehrere der Phasenströme und/oder Strangströme des Elektromotors werden vorzugsweise überwacht. Bei Identifikation eines Fehlerstroms, insbesondere eines einen Schwellwert überscheitenden der Phasenströme oder Strangströme, werden die (Phasenströme und/oder) Strangströme abgeschaltet bzw. wird die Stromversorgung der Statorspulen ausgesetzt. Alternativ oder, bevorzugt, zusätzlich erfolgt ein Kurzschluss der Phasen. Hierdurch kann einer Überlastung des Elektromotors effektiv vorgebeugt werden, insbesondere da auf diese Weise Überspannungen verhindert, die Elektronik geschützt und/oder der Motor gebremst werden kann/können.

Diese Maßnahme(n) (Abschaltung und/oder Phasenkurzschluss) sind auch unabhängig von anderen Aspekten der vorliegenden Erfindung vorteilhaft und kann/können auch unabhängig realisiert werden. Insbesondere sind sie grundsätzlich auch allgemein bei einem Betrieb, insbesondere von BLDC- und/oder PMSM-Motoren, im zweiten Feldschwächbereich vorteilhaft oder ermöglichen einen erweiterten sicheren Betrieb im zweiten Feldschwächbereich.

Die Maßnahmen und insbesondere die synergistische Kombination aus der Fehlerstromerkennung, der Stromabschaltung und dem Phasenkurzschluss haben sich jedoch als besonders hilfreich bei der vorliegenden Anwendung in Zusammenhang mit Küchenmaschinen erwiesen, wobei der Elektromotor weit in den zweiten Feldschwächbereich hinein betrieben wird. Im Ergebnis ist ein Betrieb des Elektromotors am oder im Grenzbereich möglich und die beschriebene Fehlerbehandlung ist hier vorteilhaft für einen dauerhaft sicheren und zuverlässigen Betrieb.

Ein Antrieb für ein Rührwerk im Sinne der vorliegenden Erfindung ist eine Einrichtung, die dazu geeignet, ausgebildet und/oder eingesetzt wird oder ist, einen Rührer in Bewegung, insbesondere Rotation, zu versetzen, damit dieser auf ein Produkt bearbeitend einwirken kann.

Ein Rührwerk im Sinne der vorliegenden Erfindung weist den Antrieb und den hiermit antreibbaren Rührer auf. Der Antrieb weist hierzu den Elektromotor auf, dessen Rotor mit dem Rührer mechanisch und bevorzugt drehfest gekoppelt ist, sodass sich eine Drehung des Rotors des Elektromotors unmittelbar oder mittelbar auf den Rührer überträgt, insbesondere über eine Welle.

Ein Motorregler im Sinne der vorliegenden Erfindung ist vorzugsweise eine elektronische Komponente zur Erzeugung einer Stellgröße, die den Elektromotor ansteuert bzw. betreibt, und zwar auf Basis eines Vergleichs eines Ist-Betriebsparameters (Regelgröße), der den aktuellen Betriebszustand des Elektromotors charakterisiert, mit einem Soll-Betriebsparameter (Sollwert), der einen vorgegebenen oder vorgebbaren Betriebszustand des Elektromotors charakterisiert. Der Motorregler ist damit vorzugsweise zur Regelung des Betriebszustands des Elektromotors ausgebildet und eingerichtet.

Ein Betriebszustand des Elektromotors ist oder korrespondiert vorzugsweise zu einer Drehzahl (insbesondere Rotordrehzahl) und/oder einem Drehmoment (insbesondere am Rotor) und/oder zu einer Position des Rotors des Elektromotors. Im Folgenden wird die Rotordrehzahl oder hierzu korrespondierende Drehzahl des Rührers auch kurz Drehzahl bzw. das Drehmoment am Rotor oder korrespondierend hierzu am Rührer auch kurz Drehmoment genannt, sodass diese Begriffe synonym und austauschbar sind, wenn sich aus dem Zusammenhang nichts Gegenteiliges ergibt.

Ein Dynamikparameter im Sinne der vorliegenden Erfindung ist vorzugsweise ein Parameter, dessen Änderung geeignet ist, die Dynamik des Motorreglers derart zu beeinflussen, dass sein Regelverhalten insbesondere beim Anlaufen des Elektromotors und/oder bei Änderung der Last, Drehzahl und/oder Position des Elektromotors oder seines Rotors bestimmt oder geändert wird oder ist. Der Dynamikparameter ist eine vorzugsweise manuell veränderbare und/oder durch ein Programm oder Rezept vorgebbare Größe, kann also insbesondere durch Benutzereingriff unmittelbar oder mittelbar vorgegeben und geändert werden. Der Dynamikparameter ist vorzugsweise durch Betriebsparameter bzw. die Regelung unbeeinflussbar.

Ein Dynamikparametereingang im Sinne der vorliegenden Erfindung ist vorzugsweise eine Schnittstelle zur Übergabe des Dynamikparameters an den Motorregler, wodurch das Regelverhalten, insbesondere die Regelgeschwindigkeit, des Motorreglers in Abhängigkeit von dem am Dynamikparametereingang vorgegebenen oder vorgebbaren Dynamikparameter bestimmt oder geändert wird oder ist.

Eine Dynamik bzw. Trägheit der Regelung im Sinne der vorliegenden Erfindung gibt vorzugsweise als Verhalten des Motorreglers vor, wie durch Ansteuerung bzw. Energieversorgung des Elektromotors bewirkt wird, dass sich ein Betriebszustand des Elektromotors ändert, besonders bevorzugt wie schnell (Regelgeschwindigkeit).

Als Regelgeschwindigkeit im Sinne der vorliegenden Erfindung wird vorzugsweise eine Änderungsrate bzw. ein Gradient eines Regelgrößen-Verlaufs oder Stellgrößen-Verlaufs insbesondere bei Änderung von Sollwerten, Systemzuständen bzw. Betriebsparametern verstanden. Die Regelgeschwindigkeit beschreibt im Zusammenhang mit dem Regelverhalten die Eigenschaft der Regelung, eine Regelgröße oder dieser zugrundeliegenden Stellgröße mehr oder weniger schnell bzw. träge nachzuführen.

Ein Betriebszustand bzw. der dazu korrespondierende Ist-Betriebsparameter des Elektromotors im Sinne der vorliegenden Erfindung ist vorzugsweise die (gemessene) Drehzahl, die (gemessene) (Rotor-)Position oder das Drehmoment des Elektromotors. Alternativ oder zusätzlich handelt es sich bei dem Betriebszustand um eine zur Drehzahl, zur (Rotor-)Position oder zum Drehmoment des Elektromotors korrespondierende Größe, wie einen Strom, mit dem der Elektromotor betrieben wird, insbesondere eine Stromstärke und/oder Phasenlage, eine Leistungsaufnahme bzw. Stromaufnahme des Elektromotors.

Eine Position des Elektromotors ist oder korrespondiert vorzugsweise zu der Drehlage des Rotors des Elektromotors. Dies schließt auch eine Drehlage nach einer vorgegebenen oder vorgebbaren Anzahl von vollständigen Umdrehungen des Rotors ein. Eine Position kann also durch eine gewisse, ggf. auch bruchteilig angebbare, Anzahl von Umdrehungen des Rotors bestimmt, bestimmbar, vorgegeben und/oder vorgebbar sein.

Die vorgenannten Aspekte, Merkmale und Verfahrensschritte sowie die sich aus den Ansprüchen und der nachfolgenden Beschreibung ergebenden Aspekte, Merkmale und Verfahrensschritte der vorliegenden Erfindung können grundsätzlich unabhängig voneinander, aber auch in unterschiedlicher Kombination bzw. Reihenfolge realisiert werden.

Weitere Aspekte, Vorteile, Merkmale, Eigenschaften sowie vorteilhafte Weiterbildungen der vorliegenden Erfindung ergeben sich aus den Ansprüchen und der nachfolgenden Beschreibung eines bevorzugten Ausführungsbeispiels anhand der Zeichnung. Es zeigt:
- Fig. 1: eine perspektivische Ansicht eines vorschlagsgemäßen Elektromotors;
- Fig. 2: ein schematisches Beispiel für eine PFC-Schaltung;
- Fig. 3: ein schematisches Beispiel für einen PFC-Controller; und
- Fig. 4: eine vorschlagsgemäße Küchenmaschine.

In den Figuren werden für dieselben oder ähnliche Teile dieselben oder ähnliche Bezugszeichen verwendet, wobei dieselben oder ähnliche Vorteile und Eigenschaften erreicht werden können, auch wenn von einer wiederholten Beschreibung abgesehen wird.

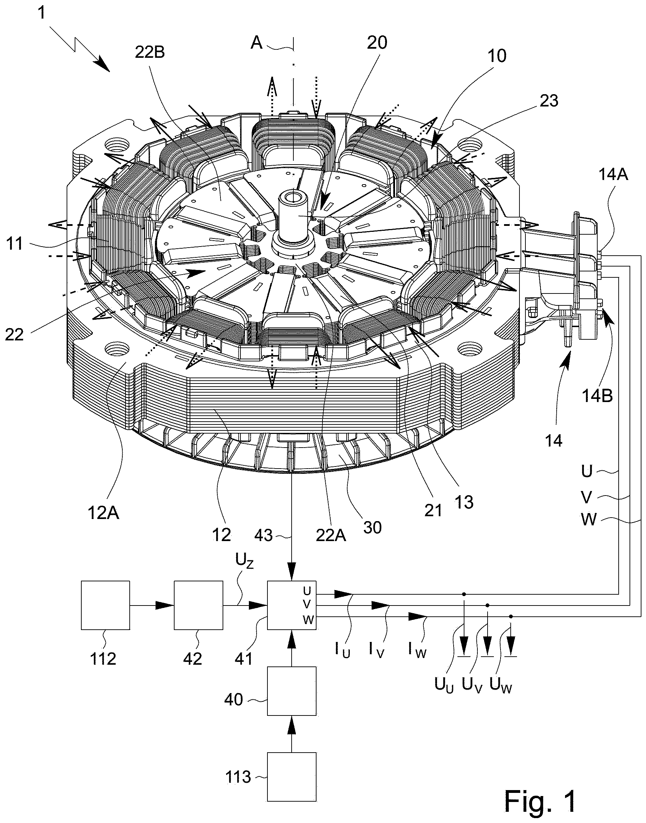

Fig. 1 zeigt einen vorschlagsgemäßen Elektromotor 1 in einer schematischen, perspektivischen Darstellung.

Im Folgenden wird bezugnehmend auf Fig. 1 zunächst der grundsätzliche Aufbau eines besonders bevorzugten Elektromotors 1 erläutert, der sich als vorteilhaft zum Antrieb von Küchenmaschinen 100, insbesondere mit einem oder mehreren der und besonders einer Kombination von Aspekten der vorliegenden Erfindung gezeigt hat.

Bei der dargestellten Ausführungsform ist der Elektromotor 1 als bürstenloser Gleichstrommotor (BLDC-Motor) bzw. Permanentmagnet-Synchronmotor (PMSM-Motor) ausgebildet. Es sind jedoch grundsätzlich auch andere Lösungen möglich.

Der vorschlagsgemäße Elektromotor 1 weist vorzugsweise eine große Drehzahlspreizung auf bzw. kann über einen großen Drehzahlbereich betrieben werden. Vorzugsweise ist die minimale Drehzahl kleiner als 100, 50 oder 20 U/min, insbesondere kleiner oder gleich 10 U/min, besonders bevorzugt kleiner oder gleich 1 U/min, und/oder ist die maximale Drehzahl größer als 2000, 5000 oder 8000 U/min, insbesondere größer oder gleich 10.000 U/min, besonders bevorzugt größer oder gleich 12.000 U/min, ganz besonders bevorzugt größer oder gleich 15.000 U/min.

Der Elektromotor 1 weist einen (feststehenden) Stator/Ständer 10 und einen (rotierenden/rotierbaren) Rotor/Läufer 20 auf, wobei der Rotor 20 um eine Rotationsachse A relativ zum Stator 10 drehbar ist.

Begriffe wie "axial", "radial" und dergleichen beziehen sich vorzugsweise auf die Rotationsachse A. Optional kann der Elektromotor 1 ein Gehäuse aufweisen bzw. können Stator 10 und/oder Rotor 20 in einem Gehäuse angeordnet sein (nicht dargestellt).

Beim Darstellungsbeispiel ist der Elektromotor 1 als Innenläufer-Motor ausgebildet bzw. ist der Rotor 20 zumindest teilweise innerhalb des Stators 10 angeordnet. Der Stator 10 weist mehrere, hier zwölf, Wicklungen/Spulen 11, einen Statorkern 12, einen Spulenträger 13 und/oder eine Anschlusseinrichtung 14 auf. Der Statorkern 12 ist vorzugsweise zumindest im Wesentlichen ringförmig oder ringartig ausgebildet. Insbesondere weist der Statorkern 12 eine zentrale Öffnung für den Rotor 20 auf. Die Rotationsachse A entspricht vorzugsweise der Symmetrie- bzw. Ringachse des Stators 10 bzw. Statorkerns 12.

Vorzugsweise umfasst der Statorkern 12 mehrere gestapelte Elektrobleche bzw. Statorbleche 12A oder ist daraus gebildet. Der Statorkern 12 bzw. die Statorbleche 12A bildet/bilden vorzugsweise mehrere, hier zwölf, Statorzähne bzw. Spulenabschnitte, wobei jede Wicklung/Spule 11 um einen Spulenabschnitt/Statorzahn gewickelt ist und/oder sich jeweils ein Spulenabschnitt/Statorzahn durch eine Spule 11 hindurch erstreckt.

Beim Darstellungsbeispiel sind vorzugsweise jeweils vier Spulen 11 aus dem gleichen Spulendraht gewickelt, insbesondere zwei benachbarte Spulen 11 und deren jeweils gegenüberliegenden Spulen 11. Die zwölf Spulen 11 des Darstellungsbeispiels lassen sich also vorzugsweise in drei Gruppen einteilen, die insbesondere separat ansteuerbar sind. Es handelt sich vorzugsweise um einen dreiphasigen Elektromotor 1. Generell sind jedoch auch andere Lösungen möglich.

Vorzugsweise ist der Spulenträger 13 vorgesehen, der die Spulen 11 trägt. Der Spulenträger 13 kann einstückig ausgebildet sein, beispielsweise durch Anspritzen an den Statorkern 12. Alternativ kann der Spulenträger 13 mehrteilig ausgebildet sein. Beispielsweise kann der Spulenträger 13 aus zwei ineinandersteckbaren Teilen bestehen, in die der Statorkern 12 eingefasst ist/wird.

Über die Anschlusseinrichtung 14 können die Spulen 11 vorzugsweise mit Strom versorgt werden bzw. eine Stromquelle an den Elektromotor 1, insbesondere die Spulen 11, angeschlossen werden, insbesondere wie in Fig. 1 mit Pfeilen an den Spulen 11 angedeutet.

Die Anschlusseinrichtung 14 weist vorzugsweise einen elektrischen Anschluss bzw. elektrische Anschlusskontakte 14A auf. Die Anschlusseinrichtung 14 weist im Darstellungsbeispiel jeweils ein Anschlusskontakt 14A für Phasen U, V, W auf, korrespondierend zu den Phasen U, V, W.

Vorzugsweise sind die Spulen 11 so miteinander verschaltet, dass pro Phase U, V, W jeweils eine Spulengruppe gebildet wird. Beim Darstellungsbeispiel bzw. dreiphasig betriebenen Elektromotor 1 werden also vorzugsweise drei Spulengruppen korrespondierend zu den drei Phasen U, V, W gebildet. Insbesondere sind beim Darstellungsbeispiel mit zwölf Spulen 11 jeweils vier Spulen 11 einer Phase U, V, W zugeordnet. Dies ist mittels der unterschiedlichen Pfeile (z.B. durchgezogenen Pfeile für Phase U, gestrichelten Pfeile für Phase V und gepunkteten Pfeile für Phase W) an den Spulen 11 in Fig. 1 angedeutet.

Zu den jeweiligen Phasen U, V, W korrespondieren Phasenströme I_{U}, I_{V}, I_{W} und Phasenspannungen U_{U}, U_{V}, U_{W}, wobei die Phasenströme I_{U}, I_{V}, I_{W} vorzugsweise mit Shunts an den Anschlusskontakten 14A messbar sind und Phasenspannungen U_{U}, U_{V}, U_{W} an den Anschlusskontakten 14A abgegriffen werden können.

Die elektrischen Anschlusskontakte 14A sind vorzugsweise durch eine oder mehrere Klemmen, insbesondere Schneidklemmen, gebildet oder weisen diese auf. An jeden Kontakt 14A bzw. jede Klemme kann vorzugsweise eine unterschiedliche Spannung angelegt werden, insbesondere so, dass die verschiedenen Spulendrähte und zugehörigen Spulen 11 unterschiedlich angesteuert werden können.

Die Anzahl der Kontakte 14A bzw. Klemmen kann je nach Anzahl der verschiedenen Spulendrähte und/oder abhängig von der Verschaltung der Spulendrähte bzw. der Spulen 11 variieren. Beim Darstellungsbeispiel weist die Anschlusseinrichtung 14 vorzugsweise drei elektrische Anschlusskontakte 14A bzw. Klemmen auf.

Vorzugsweise weist die Anschlusseinrichtung 14 einen Sternpunkt 14B der Verschaltung der Spulendrähte bzw. der Spulen 11 auf. Insbesondere sind die Spulen 11 in einer Sternschaltung miteinander verschaltet. Hierunter ist vorzugsweise zu verstehen, dass die unterschiedlichen Spulendrähte der unterschiedlichen (Gruppen von) Spulen 11, insbesondere an Enden der Spulendrähte, miteinander verbunden sind.

Vorzugsweise bildet jeder Spulendraht mit seinem einen Ende einen elektrischen Anschlusskontakt 14A bzw. ist mit einer entsprechenden Klemme elektrisch verbunden und ist mit seinem anderen Ende zum Sternpunkt 14B verbunden. Beim Darstellungsbeispiel werden vorzugsweise drei (Enden der) Spulendrähte zu einem Sternpunkt 14B miteinander verschaltet.

Die Anschlusseinrichtung 14 weist vorzugsweise, insbesondere zusätzlich zu der/den Klemme(n) für die Anschlusskontakte 14A, eine weitere Klemme, insbesondere eine Schneidklemme, zur Bildung des Sternpunkts 14B auf. Alternativ zur Klemme kann der Sternpunkt 14B auch dadurch gebildet werden, dass die entsprechenden Enden der Spulendrähte miteinander verlötet oder verschweißt oder anderweitig miteinander elektrisch verbunden werden.

Beim Darstellungsbeispiel weist der Rotor 20 vorzugsweise mehrere, hier zehn, Permanentmagnete 21, einen Rotorkern 22, eine Welle 23 und/oder einen Lüfter 30, insbesondere ein Lüfterrad, auf.

Die Permanentmagnete 21 sind vorzugsweise derart angeordnet, dass die einander zugewandten Pole bzw. Flachseiten zweier benachbarter Permanentmagnete 21 die gleiche Polarität aufweisen, so dass der zwischen den Polen bzw. Flachseiten angeordnete Teil bzw. Sektorabschnitt 22B des Rotorkerns 22 entsprechend polarisiert ist bzw. einen entsprechenden Pol des Rotorkerns 22 bildet. Mit anderen Worten sind zwei benachbarte Permanentmagnete 21 vorzugsweise in entgegengesetzte Richtungen polarisiert. Grundsätzlich können die Permanentmagnete 21 jedoch auch anders als im Darstellungsbeispiel geformt, polarisiert und/oder angeordnet sein, beispielsweise mit einer Längserstreckung in Umfangsrichtung oder senkrecht/tangential zur radialen Richtung.

Der Rotorkern 22 ist vorzugsweise zumindest im Wesentlichen ringförmig, (hohl-)zylindrisch und/oder scheibenförmig ausgebildet. Die Rotationsachse A bildet vorzugsweise eine Symmetrieachse des Rotorkerns 22.

Der Rotorkern 22 ist auf der Welle 23 befestigt, insbesondere kraft-, form- und/oder stoffschlüssig mit der Welle 23 verbunden. Der Rotorkern 22 umfasst vorzugsweise mehrere, hier zehn, Sektorsegmente bzw. Sektorabschnitte 22B, wobei zwischen zwei benachbarten Sektorabschnitten 22B jeweils ein Permanentmagnet 21 aufgenommen ist. Insbesondere sind die Permanentmagnete 21 seitlich bzw. in Umfangsrichtung jeweils von zwei Sektorabschnitten 22B begrenzt.

Durch die Permanentmagnete 21 werden bzw. sind die Sektorabschnitte 22B magnetisiert bzw. polarisiert, insbesondere wobei die Sektorabschnitte 22B alternierend Nord- und Südpole bilden. Die Permanentmagnete 21 und/oder Sektorabschnitte 22B sind vorzugsweise gleichmäßig über einen Kreisumfang verteilt. Benachbarte Permanentmagnete 21 schließen also vorzugsweise einen Winkel von 360° geteilt durch die Anzahl der Permanentmagnete 21 ein. Entsprechendes gilt für die Sektorabschnitte 22B.

Vorzugsweise umfasst der Rotorkern 22 mehrere gestapelte Elektrobleche bzw. Rotorbleche 22A oder ist daraus gebildet. Die Rotorbleche 22A sind entsprechend geformt bzw. gestanzt, um die Sektorabschnitte 22B des Rotorkerns 22 zu realisieren.

Der Lüfter 30 ist vorzugsweise an der Welle 23 befestigt, insbesondere kraft-, form- und/oder stoffschlüssig. Zusätzlich oder alternativ kann der Lüfter 30 an dem Rotorkern 22 befestigt sein, insbesondere kraft-, form- und/oder stoffschlüssig. Auch ist es möglich, dass der Lüfter 30 an den Rotorkern 22 und/oder die Welle 23 angespritzt ist.

Vorzugsweise ist der Lüfter 30 aus Kunststoff hergestellt und/oder einstückig gebildet, insbesondere spritzgegossen.

Der Lüfter 30 ist vorzugsweise scheibenartig oder plattenartig geformt und/oder zumindest im Wesentlichen ringförmig bzw. radförmig ausgebildet und/oder rotationsymmetrisch. Die Rotationsachse A bildet vorzugsweise eine Symmetrieachse des Lüfters 30. Der Lüfter 30 ist dazu ausgebildet, warme Luft vom Elektromotor 1 (in die Umgebung) wegzutransportieren und/oder kühle Luft (aus der Umgebung) dem Elektromotor 1 zuzuführen.

Als Teil des Rotors 20 rotiert das Lüfterrad 30 bei Betrieb des Elektromotors 1 um die Rotationsachse A und kann so entsprechend Luft fördern. Der Lüfter 30 kann, insbesondere einstückig mit dem Lüfter 30 gebildete, Fixierelemente (nicht dargestellt) aufweisen, die die Permanentmagnete 21 im Rotorkern 22 fixieren bzw. klemmen. Zusätzlich oder alternativ können die Permanentmagnete 21 auch mit dem Rotorkern verklebt sein und/oder durch andere, nicht vom Lüfter 30 gebildete Fixierelemente befestigt sein.

In Fig. 1 sind am Elektromotor 1 mit Pfeilen den Phasen U, V, W zugeordnete Phasenströme I_{U}, I_{V}, I_{W} angedeutet. Der Elektromotor 1 im Darstellungsbeispiel wird dreiphasig betrieben. Dies ist bevorzugt, jedoch nicht zwingend der Fall. Insbesondere kann der Elektromotor 1 auch einphasig oder mit mehr Phasen betreibbar sein oder betrieben werden.

Der Elektromotor 1 kann mit einem Motorregler 40 geregelt sein oder werden. Im Darstellungsbeispiel steuert der Motorregler 40 einen Wechselrichter 41 oder weist den Wechselrichter 41 auf, mit dem der Elektromotor 1 elektrisch verbunden ist und/oder versorgt wird.

Der Wechselrichter 41 stellt an den Phasen U, V, W Phasenströme I_{U}, I_{V}, I_{W} und Phasenspannungen U_{U}, U_{V}, U_{W} zum Betrieb des Elektromotors 1 bereit. Es versteht sich, dass Phasenströme I_{U}, I_{V}, I_{W} und Strangströme ineinander umgerechnet werden können. Diese Begriffe sind daher synonym zu verstehen und können durch einander ersetzt werden, wobei im Folgenden der Übersichtlichkeit halber von Phasenströmen I_{U}, I_{V}, I_{W} die Rede ist.

Der Wechselrichter 41 wird vorzugsweise mit einer Betriebsspannung versorgt und wandelt diese, gesteuert durch den Motorregler 40, in die Phasenströme I_{U}, I_{V}, I_{W} und Phasenspannungen U_{U}, U_{V}, U_{W}. Die Betriebsspannung ist vorzugsweise eine Gleichspannung. Die Betriebsspannung, auch Zwischenkreisspannung U_{Z} genannt, wird vorzugsweise über eine Power Factor Correction 42 bereitgestellt, die eine Netzspannung in eine Gleichspannung wandelt.

Die Power Factor Correction (PFC) 42 kann einerseits die Blindleistung reduzieren und andererseits dafür sorgen, dass die Stromaufnahme möglichst sinusförmig ist. Dies verbessert die Effizienz, reduziert Netzverluste und erfüllt gesetzliche Vorgaben zur Netzqualität. Insbesondere handelt es sich um eine PFC-Schaltung, da diese besonders effektiv und anpassungsfähig sind.

Die Betriebsspannung kann auch mittels eines Gleichrichters RF o. dgl. aus einer Notspannung gewandelt sein oder werden oder auch von einem Akkumulator oder sonstigen Energiespeicher stammen.

Der Motorregler 40 greift vom Elektromotor 1 vorzugsweise ein oder mehrere Sensorsignale 43 ab und regelt die Phasenströme I_{U}, I_{V}, I_{W} und Phasenspannungen U_{U}, U_{V}, U_{W} auf dieser Basis.

Bei dem Sensorsignal 43 handelt es sich beispielsweise um die Rotorposition bzw. Sensorwerte, die mit einem oder mehreren Encodern, Resolvern, Hall-Sensoren oder anderen Sensoren des Elektromotors 1 gebildet werden oder sind. Alternativ oder zusätzlich handelt es sich um Sensorwerte bezogen auf die Phasen U, V, W (Spannungsmessergebnisse und/oder Strommessergebnisse, insbesondere ermittelt per Shuntmessung der Phasen U, V, W).

Das Sensorsignal 43 kann insbesondere eine absolute Rotorposition, einen oder mehrere Strangströme, eine Zwischenkreisspannung U_{Z} und/oder eine Motortemperatur repräsentieren und/oder die Regelung mit dem Motorregler 40 basiert auf einem oder mehreren dieser. Der Motorregler 40 synchronisiert die Phasenströme I_{U}, I_{V}, I_{W} und Phasenspannungen U_{U}, U_{V}, U_{W} vorzugsweise mit dem Sensorsignal 43.

Bei der Regelung kann der Motorregler 40 Parameter wie ein Massenträgheitsmoment, Spulenwiderstände, Induktivitäten und/oder eine Flussverkettung der Permanentmagnete 21 zugrunde legen oder berücksichtigen oder er ist dazu ausgebildet.

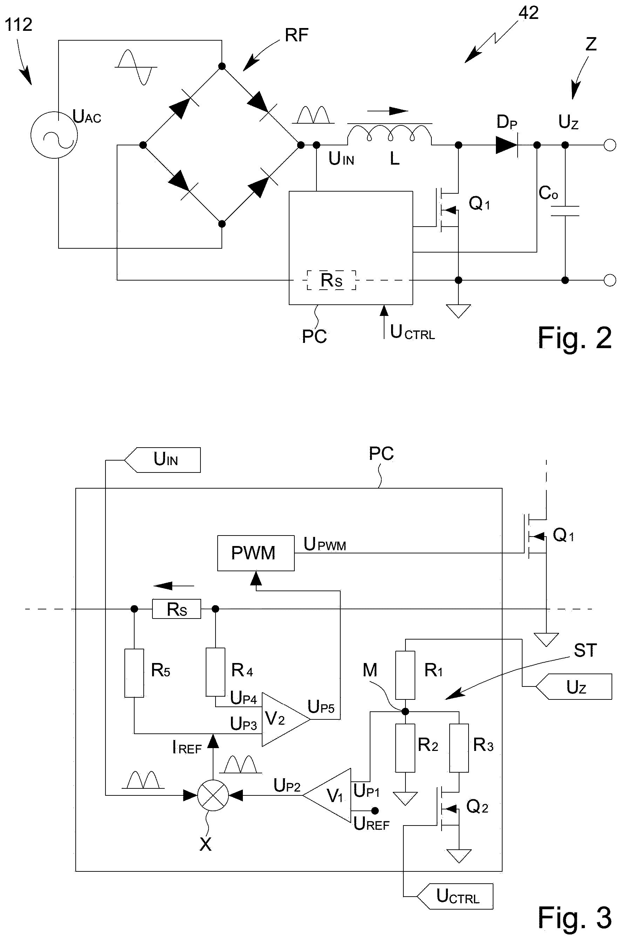

Fig. 2 zeigt ein schematisches Beispiel für eine PFC-Schaltung 42.

Eine Stromversorgung 112 der Küchenmaschine 100 ist hier durch eine AC-Spannungsquelle mit der Netzspannung U_{AC} repräsentiert, die über einen (Brücken-) Gleichrichter RF in eine pulsierende Gleichspannung U_{IN} umgewandelt wird. Diese liegt dann der weiteren Verarbeitung mittels der PFC-Schaltung 42 zugrunde, um die Zwischenkreisspannung U_{Z} zu bilden.

Die Zwischenkreisspannung U_{Z} kann vom Wechselrichter 41 in Phasenströme I_{U}, I_{V}, I_{W} und Phasenspannungen U_{U}, U_{V}, U_{W} gewandelt werden, vorzugsweise durch den Motorregler 40 gesteuert.

Die pulsierende Gleichspannung U_{IN} versorgt einen PFC-Converter, der über eine zentrale Induktivität L verfügt. Anders als bei passiven Lösungen wird eine Induktivität L hier durch einen bevorzugt hochfrequent geschalteten (Halbleiter-) Schalter Q₁ (zum Beispiel ein MOSFET) aktiv angesteuert.

Der Schalter Q₁ schließt den Stromkreis, sodass Strom über die Induktivität L fließt und diese auflädt. Während einer Einschaltphase (wenn der Schalter Q₁ geschlossen / leitfähig ist) steigt der Strom in der Induktivität L an. Danach wird der Schalter Q₁ geöffnet (hochohmig). Dadurch kehrt sich die Spannung an der Induktivität L um, sodass der gespeicherte Energieanteil über eine Diode D_{P} an den Ausgang, den Zwischenkreis Z abgegeben wird, an dem eine Ausgangsspannung bzw. Zwischenkreisspannung U_{Z} gebildet und vorzugsweise mit einem Kondensator C₀ geglättet wird. Dies entspricht dem Grundkonzept eines Boost-Converters.

Der Strom in der Induktivität L sinkt dabei (ΔI = ((U_{OUT} - U_{IN}) · t_{OFF})/L). Durch Variieren des Tastverhältnisses (D = t_{ON}/T) - also dem Verhältnis der Zeit, in der der Schalter Q₁ geschlossen ist, zur Gesamtzeit - kann der durchschnittliche Spulenstrom so geregelt werden, dass er zumindest im Wesentlichen dem sinusförmigen Verlauf der Netzspannung U_{AC} folgt.

Die Regelung der PFC-Schaltung 42 bzw. Ansteuerung des Schalters Q₁ kann durch einen PFC-Controller PC erfolgen. Fig. 3 zeigt ein schematisches Beispiel für den PFC-Controller PC.

Der PFC-Controller PC regelt eine PWM-Sequenz (Pulsweitenmodulation) bzw. PWM-Signal U_{PWM}, mit der der Schalter Q₁ angesteuert wird. Diese kann auf Basis einer von der Zwischenkreisspannung U_{Z} abgeleiteten Rückkoppelgröße U_{P1} (insbesondere Rückkoppelspannung) und einer zur Netzspannung U_{AC} synchronen Größe, wie der pulsierenden Gleichspannung U_{IN} oder hiervon abgeleiteten Größe, erzeugt werden.

Hierbei erfolgt eine Rückkopplung zur Regelung der Zwischenkreisspannung U_{Z}, die gemäß einem Aspekt der vorliegenden Erfindung einstellbar bzw. veränderbar ist.

Die Zwischenkreisspannung U_{Z} wird hierbei mittels eines Spannungsteilers ST, der hier durch die Reihenschaltung von Widerständen R₁, R₂ mit dem Mittelabgriff M zwischen den Widerständen R₁, R₂ gebildet ist, zu der an dem Mittelabgriff M abgreifbaren Rückkoppelgröße U_{P1} gewandelt, deren Verlauf zu dem der Zwischenkreisspannung U_{Z} korrespondiert. Die Rückkoppelgröße U_{P1} ist insbesondere die skalierte Zwischenkreisspannung U_{Z}, vorzugsweise wobei die Skalierung einstellbar ist.

Die vorschlagsgemäße Lösung ermöglicht die Manipulation der Rückkoppelgröße U_{P1}. Insbesondere ist die Rückkoppelgröße U_{P1} über das Spannungsteilerverhältnis einstellbar. Hierzu ist eine Reihenschaltung eines Widerstands R₃ mit einem (Halbleiter-) Schalter Q₂ vorgesehen, die an dem Spannungsteiler ST angreift oder einen Teil dessen bildet. Im Darstellungsbeispiel greift die Reihenschaltung am Mittelabgriff M an und kann parallel zu einem der Widerstände R₁, R₂ des Spannungsteilers ST liegen. Die veränderbare Anpassung der Rückkoppelgröße U_{P1} kann jedoch auch mit anderen Maßnahmen als einem Spannungsteiler erfolgen. Beispielsweise kommt ein entsprechend beschalteter Operationsverstärker infrage, bei dem ebenfalls die Verstärkung durch Beschaltung einstellbar ausgeführt werden kann.

Wird der Schalter Q₂ geschlossen, ändert sich das Impedanzverhältnis bezogen auf den Mittelabgriff M und die Rückkoppelgröße U_{P1} entsprechend. Hier ist die Reihenschaltung gegen Masse verschaltet, sodass der Absolutwert der Rückkoppelgröße U_{P1} sinkt, wenn der Schalter Q₂ geschlossen wird, während der Verlauf der Rücckoppelspannung U_{P1} nach wie vor zu dem Verlauf der Zwischenkreisspannung U_{Z} korrespondiert.

Ein (langsamer) Regelkreis sorgt dafür, dass die Ausgangsspannung U_{Z} konstant gehalten wird, indem er die Rückkoppelgröße U_{P1} mit einer vorgegebenen Referenzspannung U_{REF} vergleicht (mit einem Komparator V₁) und ein Fehlersignal U_{P2} erzeugt, das im Ausführungsbeispiel in die Erzeugung eines Stromreferenzwertes I_{REF} eingespeist wird (im Darstellungsbeispiel über einen Widerstand R₅ zu einer Spannung gewandelt).

Wird der Schalter Q₂ geschaltet, wirkt dies für den Regelkreis so, als sei die Zwischenkreisspannung U_{Z} verändert worden und die Differenz wird ausgeregelt, also die Zwischenkreisspannung U_{Z} angepasst. Somit ergibt sich letztlich eine geänderte Zwischenkreisspannung U_{Z}, die im Ergebnis also einstellbar ist.

Im Ausführungsbeispiel kann der Schalter Q₂ über ein Steuersignal U_{CTRL} geschaltet werden. Der Schalter Q₂ kann beispielsweise durch einen Transistor, insbesondere MOSFET, realisiert sein.

Grundsätzlich können auch andere Maßnahmen ergriffen werden, um die Zwischenkreisspannung U_{Z} zu manipulieren. So ist es möglich, mehrere Schalter-Widerstand-Kombinationen vorzusehen, um das Widerstandsverhältnis mehrstufig änderbar zu machen.

Auch können auf andere Weise einstellbare Spannungsteiler vorgesehen werden oder Schaltungen, die auf sonstige Weise die Rückkoppelgröße U_{P1} bzw. Rückkoppelspannung im Mittelwert einstellbar von der Zwischenkreisspannung U_{Z} ableiten. Alternativ oder zusätzlich könnte auch eine Referenzspannungsmanipulation erfolgen.

Das Beispiel basiert optional auf einem dualen Konzept, bei dem ein schneller Stromregelkreis und ein langsamerer Spannungsregelkreis zusammenwirken.

Der schnellere Regelkreis vergleicht (beispielsweise über einen Komparator V₂) den Strom der Spule 11 - beispielsweise über einen Shunt-Widerstand R_{S} als korrespondierende Spannung U_{P4} über einen Widerstand R₄ abgegriffen - mit dem Stromreferenzwert I_{REF}, - vorzugsweise über einen Widerstand R₅ in eine Spannung U_{P3} gewandelt - der in Abhängigkeit von der pulsierenden Gleichspannung U_{IN} generiert wird, und bildet hierbei eine PWM-Steuergröße U_{P5}.

Der Stromreferenzwert I_{REF} kann hierbei dadurch gebildet werden, dass ein Fehlersignal U_{P2} mit der pulsierenden Gleichspannung U_{IN} oder einem hiervon abgeleiteten Verlauf multipliziert wird, im Ausführungsbeispiel mittels eines Multiplikators X.

Die PWM-Steuergröße U_{P5} steuert eine Pulsweitenmodulations-Schaltung PWM, die den Schalter Q₁ mit einem PWM-Signal U_{PWM} ansteuert, vorzugsweise mit einem Tastverhältnis korrespondierend zu der PWM-Steuergröße U_{P5}.

Hierdurch kann der Strom, der von der Induktivität L in den Kondensator C₀ und damit die Zwischenkreisspannung U_{Z} geregelt werden.

Insgesamt führt diese aktive Steuerungsstrategie dazu, dass der Eingangsstrom nahezu ideal mit der Netzspannung U_{AC} korreliert - was nicht nur den Leistungsfaktor erheblich verbessert, sondern auch für eine optimierte Energieausnutzung und stabile Ausgangsspannung sorgt.

Es versteht sich, dass insbesondere der PFC-Controller PC intern anders und insbesondere viel komplexer aufgebaut sein kann. Er soll hier nur als Beispiel für eine mögliche Herangehensweise stehen. Gemein sind unterschiedlichen Lösungen hingegen insbesondere, dass eine Rückkopplung vorgesehen ist und daher durch Eingriff bei dieser die Zwischenkreisspannung U_{Z} vorschlagsgemäß einstellbar realisiert werden kann.

Die Zwischenkreisspannung U_{Z} wird also vorzugsweise durch die PFC-Schaltung 42 geregelt, wobei die Regelung auf einer von der Zwischenkreisspannung U_{Z} abgeleiteten Rückkoppelgröße U_{P1}, insbesondere Rückkoppelspannung, basiert und wobei die Zwischenkreisspannung U_{Z} durch Beeinflussung der Rückkoppelgröße U_{P1} der PFC-Schaltung 42 verändert wird.

Insbesondere ist vorgesehen, dass die PFC-Schaltung 42 die PWM-Schaltung PWM zur Erzeugung der Zwischenkreisspannung U_{Z} aufweist, wobei die Zwischenkreisspannung U_{Z} zu einem Tastverhältnis der PWM-Schaltung PWM korrespondiert, und wobei das Tastverhältnis der PWM-Schaltung PWM mit der Rückkoppelgröße U_{P1} geregelt wird, die vom Verlauf der Zwischenkreisspannung U_{Z} geprägt ist und deren Mittelwert eingestellt oder verändert wird. In vorteilhafter Weise ist hierbei keine Veränderung an der PWM-Schaltung PWM erforderlich. So kann eine Trägerfrequenz der PWM-Schaltung PWM unverändert bleiben, bzw. bleibt vorzugsweise unverändert.

Die Rückkoppelgröße U_{P1} kann unter Teilen der Zwischenkreisspannung U_{Z} mit einem einstellbaren Faktor erzeugt werden und durch eine Veränderung des Faktors kann entsprechend die Zwischenkreisspannung U_{Z} eingestellt oder verändert werden.

Bei einer ersten Weiterbildung der Erfindung ist bei niedrigen Drehzahlen des Elektromotors 1 die Rückkoppelgröße U_{P1} von der Zwischenkreisspannung U_{Z} unabhängig und/oder als Referenzgröße fest vorgegeben. Der Knoten bzw. Mittelabgriff M kann also auf festes Potenzial gezogen werden, beispielsweise über eine zuschaltbare bzw. mit dem Mittelabgriff M verbindbare Bandgap-Referenz (nicht dargestellt) oder dergleichen.

In einem weiteren Aspekt der vorliegenden Erfindung kann die PFC-Schaltung abgeschaltet werden. Dies bedeutet, der Schalter Q₁ der PFC-Schaltung ist und bleibt geöffnet. In diesem Fall stellt sich im Zwischenkreis Z näherungsweise eine Zwischenkreisspannung U_{Z} ein, die sich aus der mit dem Kondensator C₀ geglätteten gleichgerichteten Netzspannung U_{AC} bzw. der mit dem Kondensator C₀ geglätteten Eingangsspannung U_{IN} ergibt.

Die Abschaltung kann beispielsweise dadurch erfolgen, dass die Rückkoppelgröße U_{P1} so festgelegt wird oder ist, dass die PFC-Schaltung 42 den Schalter Q₁ geöffnet hält. Beispielsweise wird die Rückkoppelgröße U_{P1} dauerhaft über (oder unter) einer Referenzspannung U_{REF} gehalten.

Wie bereits erwähnt, kann dies beispielsweise durch Aufprägen einer Referenzspannung wie durch Zuschalten einer Bandgap-Referenz oder auch durch Änderung des Spannungsteilerverhältnisses erfolgen, insbesondere mit einer weiteren Reihenschaltung aus einem Widerstand und einem Schalter parallel zu und wie die Kombination aus dem dargestellten Widerstand R₃ und Schalter Q₂ (nicht dargestellt).

Dieser Modus kann insbesondere bei niedrigen Drehzahlen (des Rotors 20 bzw. Rührers 121), für niedrige Drehzahlen (Soll-Drehzahl) oder wenn solche beispielsweise über eine Benutzerschnittstelle 113 und/oder wenn niedrige Drehzahlen durch ein Programm oder Rezept vorgegeben sind aktiviert werden. Niedrige Drehzahlen sind beispielsweise Drehzahlen, die geringer als 50 U/min, 30 U/min oder 20 U/min sind.

Bei einer Netzspannung U_{AC} von 230 V ergibt sich eine Zwischenkreisspannung U_{Z} von etwa 325 V, während mit aktiver PFC-Schaltung 42 etwa 360 V möglich und sinnvoll sind.

Die Reduktion der Zwischenkreisspannung U_{Z} kann stufenweise oder stufenlos einstellbar sein. Dies kann durch Einstellen unterschiedlicher Spannungsteilerverhältnisse des Spannungteilers ST erfolgen. Beispielsweise kann dies einer oder mehreren weiteren Reihenschaltungen aus jeweils einem Widerstand und einem Schalter parallel zu der Kombination aus dem dargestellten Widerstand R₃ und Schalter Q₂ oder auf andere Weise realisiert sein.

Es ist möglich, dass der Schalter Q₂ im Normalbetrieb (höhere Zwischenkreisspannung U_{Z}) geschlossen ist, also den zusätzlichen Widerstand R₃ zu- bzw. parallelschaltet, und zur Reduktion der Zwischenkreisspannung U_{Z} oder Abschaltung der PFC-Schaltung 42 der Schalter Q₂ geöffnet wird. Hierdurch wird bei gleicher Zwischenkreisspannung U_{Z} die Rückkoppelgröße U_{P1} vergrößert, was die PFC-Schaltung 42 dadurch ausregelt, dass sie die Zwischenkreisspannung U_{Z} reduziert. Es sind jedoch auch andere Lösungen möglich.

Eine Reduktion der Zwischenkreisspannung U_{Z}, sei es durch Änderung der Einstellung der PFC-Schaltung 42, insbesondere durch Beeinflussung des Feedbackpfads, oder deren Deaktivierung, kann bevorzugt automatisch erfolgen, wenn der Motorregler 40 beispielsweise aus Rezepten, Modi oder als Kundenwunsch (Eingabe über die Benutzerschnittstelle von beispielsweise höchstens 20 U/min oder 10 U/min) eine kleinere Drehzahl als Input bekommt.

Bei Feststellung (durch den Motorregler 40), dass die vorgegebene Drehzahl kleiner als ein Schwellwert wie die derzeit (mit aktiver PFC-Schaltung 42 im Normalbetrieb) kleinste einstellbare Drehzahl ist, kann die PFC-Schaltung 42 insbesondere durch den Motorregler 40 so konfiguriert werden, dass die Zwischenkreisspannung U_{Z} sinkt und damit auch geringere Drehzahlen erreicht werden können.

Alternativ oder zusätzlich kann die PFC-Schaltung 42 bei Änderung der Lastsituation ein- bzw. umgestellt werden, vorzugsweise so, dass sich eine andere Zwischenkreisspannung U_{Z} einstellt.

Beispielsweise kann eine Blockade des Rührers 121 oder ein hoher mechanischer Widerstand am Rührer 121 detektiert und die PFC-Schaltung 42 daraufhin ein- bzw. umgestellt werden, vorzugsweise so, dass sich eine andere und insbesondere geringere Zwischenkreisspannung U_{Z} einstellt.

Insbesondere kann eine am Rührer 121 bzw. Rotor 20 gemessene Drehzahl verwendet werden, um zu entscheiden, dass die PFC-Schaltung 42 so ein- bzw. umgestellt wird, dass eine höhere oder niedrigere Zwischenkreisspannung U_{Z} erzeugt wird. Eine Schwelle für die aktuelle Drehzahl oder ein Soll-Istwertvergleich der aktuellen Drehzahl des Rührers 121 bzw. Rotors 20 kann also verwendet werden, um die PFC-Schaltung 42 ein- bzw. umzustellen.

Die PFC-Schaltung 42 gemäß dem Ausführungsbeispiel ist ein Hochsetzsteller, nämlich Boost-Converter. Die PFC-Schaltung 42 kann jedoch auch ein Buck-Converter oder einen Buck-Boost-Converter aufweisen oder bilden, mit dem die Zwischenkreisspannung U_{Z} erzeugt wird.

In vorteilhafter Weise kann ein abgedecktes Drehzahlspektrum durch die Einstellung der PFC-Schaltung 42 geändert werden. Hierzu können durch die Änderung der Einstellung der PFC-Schaltung 42 verringerte Minimalwerte und/oder vergrößerte Maximalwerte einer oder mehrerer mit der Zwischenkreisspannung U_{Z} gebildeter Phasenspannungen U_{U}, U_{V}, U_{W} und/oder Phasenströme I_{U}, I_{V}, I_{W} zur Versorgung des Elektromotors 1 erzeugt werden.

Die PFC-Schaltung 42 kann in Abhängigkeit von einem Soll-Betriebsparameter, insbesondere einer Soll-Drehzahl, automatisch unterschiedlich eingestellt werden. Hierbei kann bei Verringerung der Soll-Drehzahl die PFC-Schaltung 42 automatisch so eingestellt werden, dass eine Reduktion der Zwischenkreisspannung U_{Z} bewirkt wird. Alternativ oder zusätzlich kann bei Vergrößerung der Soll-Drehzahl die PFC-Schaltung 42 automatisch so eingestellt werden, dass eine Erhöhung der Zwischenkreisspannung U_{Z} bewirkt wird.

Zwecks effizienter Bremsung kann eine Rückspeisung von aus Rotationsenergie des Elektromotors 1 gewonnener elektrischer Energie in einen durch den Ausgang der PFC-Schaltung 42 gebildeten Zwischenkreis Z erfolgen, nachdem durch Einstellung der PFC-Schaltung 42 die Zwischenkreisspannung U_{Z} des Zwischenkreises Z gesenkt worden ist.

Steht beispielsweise in einem Programm oder Rezept eine Drehzahlreduktion an, kann - ggf. auch auf Basis des Programms bzw. Rezepts - zuvor die Zwischenkreisspannung U_{Z} mittels Einstellung der PFC-Schaltung 42 reduziert werden, was Kapazitäten zur Aufnahme von Energie im Kondensator C₀ des Zwischenkreises Z frei macht. Eine Rückspeisung kann dann erfolgen, was zur Spannungserhöhung im Zwischenkreis Z führt, ohne die Nennspannung des Kondensators C₀ zu überschreiten.

Der Motorregler 40 kann alternativ oder zusätzlich eine oder mehrere der folgenden Maßnahmen bewirken oder dazu ausgebildet sein, wobei bevorzugt die PFC-Schaltung 42 entsprechend eingestellt bzw. eine Einstellung der PFC-Schaltung 42 geändert wird, insbesondere sodass die Zwischenkreisspannung U_{Z} angepasst oder geändert wird oder ist:
1. Aktive Stromwinkelsteuerung:
   Der Stromwinkel zwischen der Spannung und der Gegen-EMK wird vorzugsweise bewusst verschoben:
   Die d-Komponente der Phasenströme I_{U}, I_{V}, I_{W} wird vorzugsweise negativ geregelt, um den Rotorfluss zu schwächen und die Gegen-EMK zu reduzieren.
   Die q-Komponente der Phasenströme I_{U}, I_{V}, I_{W} bleibt für die Drehmomentbildung verantwortlich, wird aber vorzugsweise in ihrer Amplitude verringert.
2. Einsatz von Pulsweitenmodulation (PWM):
   Die PWM wird zur Bildung des Wechselrichters 41 bzw. zur Bildung der Phasenspannungen U_{U}, U_{V}, U_{W} vorzugsweise so angepasst, dass die Spannungszeitfläche bei jeder Phase U, V, W maximiert wird:
   Der Motorregler 40 moduliert vorzugsweise die Phasenspannungen U_{U}, U_{V}, U_{W} so, dass die Gegen-EMK überwunden und der Stromfluss aufrechterhalten wird.
3. Kompensation der Gegen-EMK:
   Da die Gegen-EMK bei hohen Drehzahlen die Betriebsspannung bzw. Zwischenkreisspannung U_{Z} erreicht oder überschreitet, werden die Phasenströme I_{U}, I_{V}, I_{W} durch den Motorregler 40 vorzugsweise aktiv so gesteuert, dass die Phasenströme I_{U}, I_{V}, I_{W} entgegen der Gegen-EMK wirken. Hierbei kompensiert der Motorregler 40 vorzugsweise die Spannungssättigung der Phasenspannungen U_{U}, U_{V}, U_{W}, was zu verzerrten Stromverläufen führen kann.
4. Erhöhung der Schaltfrequenz:
   Um die Stromregelung bei hohen Drehzahlen aufrechtzuerhalten, kann der Motorregler 40 die Schaltfrequenz des Wechselrichters 41 erhöhen. Der Motorregler 40 bewirkt also vorzugsweise eine hochfrequentere Schaltregelung des Wechselrichters 41 im Vergleich zum Ankerstellbereich bzw. ersten Feldschwächbereich. Dies reduziert die Rippelströme. Es können zusätzliche Harmonische durch die Interaktion zwischen Schaltfrequenz und Motorinduktivität resultieren.
5. Begrenzung des Drehmoments:
   Die verfügbare Stromamplitude der Phasenströme I_{U}, I_{V}, I_{W} wird vorzugsweise reduziert, insbesondere um die thermischen und elektrischen Grenzen des Elektromotors 1 und Wechselrichters 41 einzuhalten. Dies führt zu einem sinkenden Drehmoment im zweiten Feldschwächbereich.
6. Thermische und elektrische Schutzmaßnahmen:
   Der Motorregler 40 überwacht vorzugsweise die Belastung des Elektromotors 1 und/oder Wechselrichters 41, um Schäden durch Überhitzung oder Überstrom zu verhindern.
7. Space Vector Modulation (SVM)
   Der Motorregler 40 kann zur Erzeugung von sinusförmigen Phasenspannungen U_{U}, U_{V}, U_{W}, anstatt direkt sinusförmige Signale zu erzeugen, sogenannte Space Vectors verwenden, die durch Kombination der Schaltzustände der Wechselrichtertransistoren gebildet werden.
   Der Wechselrichter 41 erzeugt diskrete Spannungsvektoren, die in einem d-q-Koordinatensystem dargestellt werden können. Diese Vektoren werden so kombiniert, dass annähernd sinusförmige Phasenspannungen U_{U}, U_{V}, U_{W} am Elektromotor 1 erzeugt werden. Die Pulsweitenmodulation (PWM) schaltet vorzugsweise zwischen den Vektoren, um die gewünschte Ausgangsspannung zu erreichen.
   Hierdurch können eine höhere Ausnutzung der Betriebsspannung des Wechselrichters 41 bzw. der Zwischenkreisspannung U_{Z} und eine Reduktion von Oberschwingungen und damit geringere Verluste im Elektromotor 1 sowie eine präzise Steuerung der Phasenströme I_{U}, I_{V}, I_{W} erreicht werden.
8. Trapezoidale Zero-Sequence
   Eine Zero-Sequence-Komponente ist die oder ein Teil der zusätzlichen Spannungskomponente 16, die vorzugsweise allen drei Phasen U, V, W gleichermaßen (im Gleichtakt) hinzugefügt wird. Bei einer "trapezoidalen" Zero-Sequence wird die Form der hinzugefügten Spannungskomponente 16 zumindest im Wesentlichen trapezförmig.
   Die Spannungskomponente 16 beeinflusst die Spannungsausnutzung des Wechselrichters 41. Sie verändert die Schaltzeiten der Wechselrichtertransistoren vorzugsweise so, dass die Phasenspannungen U_{U}, U_{V}, U_{W} in einem optimalen Bereich gehalten werden, ohne das Drehmoment oder den Fluss im Elektromotor 1 zu stören.
   Die trapezförmige Zero-Sequence wird verwendet, um die Spannungsausnutzung zu maximieren und gleichzeitig eine gleichmäßige Stromform in den Phasen U, V, W zu gewährleisten. Sie passt besonders gut zur Charakteristik des vorschlagsgemäß als BLDC- und/oder PMSM-Motor realisierten Elektromotors 1.

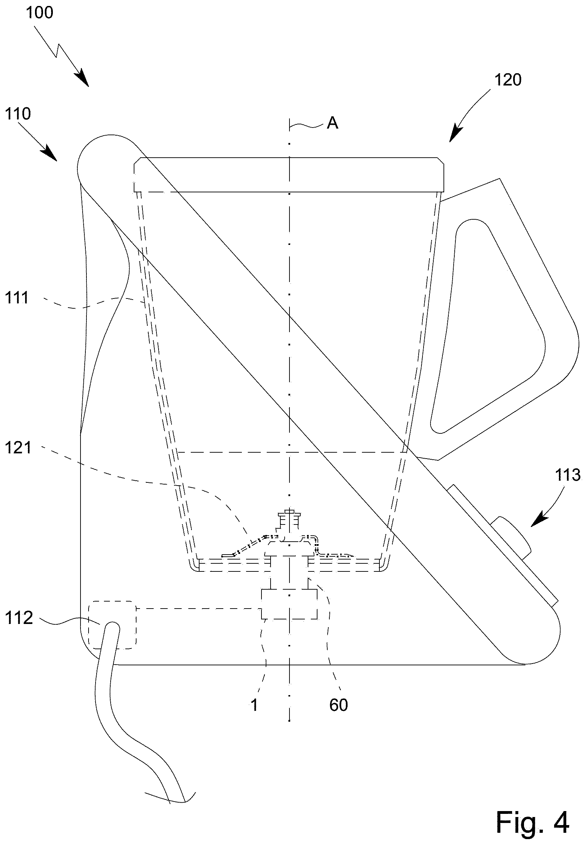

Fig. 4 zeigt schematisch eine vorschlagsgemäße Küchenmaschine 100 zur Zubereitung von Speisen bzw. zur Bearbeitung von Lebensmitteln. Bei der Küchenmaschine 100 handelt es sich vorzugsweise um eine elektrisch betriebene Multifunktions-Küchenmaschine, die zum Zerkleinern, Rühren bzw. Mischen und/oder Erhitzen bzw. Kochen von Lebensmitteln ausgebildet ist.

Die Küchenmaschine 100 weist vorzugsweise eine Basisstation 110 und/oder ein Gefäß 120 zur Aufnahme von Lebensmitteln auf.

Die Basisstation 110 und das Gefäß 120 sind vorzugsweise elektrisch und/oder mechanisch verbunden oder verbindbar, insbesondere um ein Erhitzen und/oder Mischen/Umrühren des Lebensmittels in dem Gefäß 120 zu ermöglichen.

Fig. 4 zeigt die Küchenmaschine 100 im üblichen Gebrauchszustand bzw. in der Anschlussposition, in der das Gefäß 120 elektrisch und/oder mechanisch an die Basisstation 110 angeschlossen ist.

Die Basisstation 110 weist vorzugsweise eine Aufnahme 111 auf, um das Gefäß 120 zumindest teilweise und/oder bodenseitig aufzunehmen. Besonders bevorzugt ist das Gefäß 120 zumindest teilweise in die Basisstation 110 einsetzbar oder einhängbar, um das Gefäß 120 mechanisch und/oder elektrisch mit der Basisstation 110 zu verbinden.

Das Gefäß 120 ist mit einem Rührer 121 ausgestattet, insbesondere um Lebensmittel im Gefäß 120 zu zerkleinern und/oder zu mischen. Der Rührer 121 ist vorzugsweise am Boden des Gefäßes 120 angeordnet bzw. drehbar gelagert. Der Rührer 121 weist vorzugsweise mehrere, insbesondere austauschbare, Rührblätter auf.

Vorzugsweise weisen die Rührblätter Schneiden auf oder sind als Schneiden ausgebildet, um Lebensmittel zu zerkleinern.

Das Gefäß 120 ist mechanisch mit der Basisstation 110 verbunden oder verbindbar, um den Rührer 121 mittels der Basisstation 110 anzutreiben.

Zum Antrieb des Rührers 121 weist die Küchenmaschine 100, insbesondere die Basisstation 110, den Elektromotor 1 auf, der über die Welle 23 - optional über einen Wellenaufsatz - mit dem Rührer 121 verbunden oder verbindbar ist und/oder - in der Anschlussposition - von unten formschlüssig in den Boden des Gefäßes 120 eingreift.

In der vorschlagsgemäßen Küchenmaschine 100 ist vorzugswiese ein Betrieb eines BLDC- und/oder PMSM-Motors als Elektromotor 1 oder eines anderen elektronisch kommutierten Elektromotors 1 über einen großen Drehzahlbereich (stufenlos und/oder in Stufen einstellbar) vorgesehen.

Vorzugsweise entspricht die Rotationsachse A des Elektromotors 1 der Drehachse des Rührers 121 und/oder einer Mittelachse des Gefäßes 120, die mittig durch das Gefäß 120 verläuft. Insbesondere ist oder wird der Rührer 121 durch den Elektromotor 1 direkt angetrieben.

Vorzugsweise ist die Mittelachse eine Längs- oder Symmetrieachse des vorzugsweise länglichen, zylindrischen und/oder zumindest im Wesentlichen rotationssymmetrischen Gefäßes 120.

Die Küchenmaschine 100, insbesondere die Basisstation 110, weist vorzugsweise eine Stromversorgung 112 auf, um den Elektromotor 1, insbesondere dessen Spulen 11, und/oder andere Einrichtungen der Küchenmaschine 100 wie den Motorregler 40, den Wechselrichter 41, und/oder die PFC-Schaltung 42 mit elektrischem Strom zu versorgen, wie auch in Fig. 1 angedeutet.

Abhängig von der Drehgeschwindigkeit bzw. Drehzahl des Rührers 121 bzw. Elektromotors 1 ist die Küchenmaschine 100 vorzugsweise sowohl zum Rühren bzw. Kneten (bei kleinen Drehzahlen) als auch zum Zerkleinern (bei großen Drehzahlen) von Zutaten ausgebildet. Besonders bevorzugt ist auch ein langsames Rühren, beispielsweise mit 10 U/min und/oder ein sehr feines bzw. definiertes Zerkleinern, beispielsweise mit 10.000 U/min möglich. Letzteres wird in besonders bevorzugter Weise durch den vorschlagsgemäßen Betrieb des Elektromotors 1 im Feldschwächbereich und insbesondere (auch) im zweiten Feldschwächbereich erreicht.

Die Küchenmaschine 1 kann, insbesondere an der Basisstation 110, eine Benutzerschnittstelle 113 aufweisen. Mit der Benutzerschnittstelle 113 können Eingaben getätigt werden, die den Motorregler 40 dazu zu konfigurieren, den Elektromotor 1 in einer bestimmten Art und Weise zu betreiben und/oder unmittelbar oder mittelbar die PFC-Schaltung 42 zu steuern, also insbesondere die Zwischenkreisspannung U_{Z} durch Einstellung der PFC-Schaltung 42 zu verändern.

Insbesondere können über die Benutzerschnittstelle 113 dem Motorregler 40 eine Drehzahl, ein periodisches Drehzahlprofil wie ein Pulsbetrieb, allgemeiner gesprochen ein Drehzahl- bzw. Drehmomentverlauf mit über der Zeit variierenden Werten und/oder ein Rezept mit entsprechenden Angaben vorgegeben oder dazu ausgebildet sein.

Die Benutzerschnittstelle 113 kann dabei den Motorregler 40 so konfigurieren, dass er mit dem Wechselrichter 41 Phasenstrom- bzw. Phasenspannungsverläufe der Phasen U, V, W erzeugt, um den Elektromotor 1 entsprechend zu regeln.

Die Benutzerschnittstelle 113 kann dazu ausgebildet sein, dass die PFC-Schaltung 42 durch Bedienung der Benutzerschnittstelle 113 mittelbar oder unmittelbar ein- oder umgestellt wird oder umstellbar ist bzw. die Zwischenkreisspannung U_{Z} geändert oder angepasst wird oder ist. Dies kann durch Rezeptwahl, Programmwahl, durch unmittelbare oder mittelbare Vorgabe des Dynamikparameters, durch Eingabe von Zutaten durch Start eines Bremsvorgangs, Vorgabe eines oder mehrerer Betriebsparameter oder auf sonstige Weise erfolgen.

Der Elektromotor 1 der Küchenmaschine 100 kann im zweiten Feldschwächbereich betrieben werden oder ist dazu ausgebildet. Die Einstellungen der Küchenmaschine 100 unterstützen eine Konfiguration bzw. Steuerung des Motorreglers 40 derart, dass der Elektromotor 1 im zweiten Feldschwächbereich betrieben wird oder betreibbar ist.

Es versteht sich, dass der Elektromotor 1 mit der Konstruktion und/oder Regelung gemäß des Ausführungsbeispiels aus Fig. 1 als Antrieb oder Teil des Antriebs der Küchenmaschine 100 besonders bevorzugt ist. Dennoch sind die weiteren, insbesondere regelungstechnischen Aspekte der vorliegenden Erfindung nicht auf das konkrete Beispiel für den Elektromotor 1 gemäß Fig. 1 beschränkt. Diese können also auch mit anders konstruierten Elektromotoren, bevorzugt BLDC- und/oder PMSM-Motoren, kombiniert vorteilhaft in der Küchenmaschine 100 vorgesehen sein oder eingesetzt werden.

Der in der Küchenmaschine 100 eingesetzte Elektromotor 1 weist bevorzugt eine Polpaarzahl von fünf auf. Diese hat sich bei der Anwendung des Elektromotors 1 zum Antrieb des Rührers 121 als besonders günstig in Bezug auf Rundlauf, Geräuschentwicklung, Kraftentfaltung, Gewicht und Volumen gezeigt, besonders wenn, wie bevorzugt, der Elektromotor 1 im Feldschwächbereich und insbesondere auch im zweiten Feldschwächbereich betrieben wird oder betreibbar ist.

Die elektrische Aufnahmeleistung des Antriebssystems (Elektromotor 1 mit Steuerelektronik - Motorregler 40, Wechselrichter 41, optional PFC-Schaltung 42) der Küchenmaschine 100 ist vorzugsweise begrenzt. Sie beträgt insbesondere weniger als 1000 W, insbesondere weniger als 800 W oder maximal 600W.

Ein Links- und Rechtslauf ist vorzugsweise einstellbar bzw. die Küchenmaschine 100 ist dazu ausgebildet, über Änderung der Motordrehrichtung einen Links- und Rechtslauf des Rührers 121 zu ermöglichen. Ferner arbeitet der Elektromotor 1 vorzugsweise getriebelos bzw. mit Direktantrieb.

Mit Hilfe des bevorzugt vektorbasierten Regelungsverfahrens wird bei dem Elektromotor 1 unter Einsatz in der vorschlagsgemäßen Küchenmaschine 100 eine Feldschwächung erreicht. Grundsätzlich sind jedoch auch - insbesondere außerhalb des (zweiten) Feldschwächbereichs - andere Regelverfahren alternativ oder zusätzlich möglich (z.B. Steuerung ohne Regelverfahren, blockkommutierte Regelverfahren).

Bei Laständerung (z.B. wenn Kartoffeln in das Gefäß 120 insbesondere mit laufendem Rührer 121 geworfen werden) werden andere Betriebsbereiche bzw. Betriebsparameter erzeugt, die ggf. die Verwendung eines anderen Regelungsverfahrens bedingen.

Die Änderung auf ein anderes Regelungsverfahren konnte in der Vergangenheit für den Anwender wahrnehmbare Sprünge hinsichtlich der Drehzahl und des Drehmoments bewirken. Unter Umständen waren diese Sprünge akustisch wahrnehmbar. Im Extremfall konnten ferner Betriebspunkte angefahren werden, in denen permanent zwischen zwei unterschiedlichen Regelungsverfahren hin und her gewechselt wurde. Dies wird nun vorzugsweise vermieden.

Vorzugsweise wird ein Modulationsverfahren höherer Ordnung, insbesondere "Space vector modulation with trapezodial zero-sequence" zur Regelung des Elektromotors 1 der Küchenmaschine 100 verwendet. Dies trägt zur verbesserten Ausnutzung einer begrenzten Eingangsspannung bzw. Zwischenkreisspannung U_{Z} bei. Insbesondere kann dadurch vermieden werden, schon bei niedrigeren Drehzahlen eine verstärkte Feldschwächung vorzunehmen zu müssen, die bei begrenzter Eingangsleistung zu einer Reduktion der mechanischen Abtriebsleistung führen würde. Es wird also ein höheres Drehmoment bei gleicher Drehzahl bzw. ein erweitertes Drehzahlspektrum ermöglicht.

In synergistischer Weise kann die Zwischenkreisspannung U_{Z} mit der PFC-Schaltung 42 eingestellt oder verändert werden, was zur effizienten Nutzung von Modulationsverfahren höherer Ordnung beiträgt. Die PFC-Schaltung 42 kann in Abhängigkeit vom Modulationsverfahren vorschlagsgemäß eingestellt werden oder die Einstellung geändert werden.

Bei vorschlagsgemäßem Einsatz von Elektromotoren 1 mit so großer Drehzahlspreizung in der Küchenmaschine 100 und insbesondere bei Betrieb des Elektromotors 1 im (zweiten) Feldschwächbereich hat es sich als vorteilhaft erwiesen, Maßnahmen zu ergreifen, um eine Entmagnetisierung der Permanentmagnete 21 zu verhindern. Dies gilt insbesondere bei Einstellung der PFC-Schaltung 42, insbesondere zur Erzeugung mehrerer Zwischenkreisspannungen U_{Z}.

Wenn ein Fehlerstrom in den Spulen 11 erkannt wird, werden in einem Aspekt der vorliegenden Erfindung die Phasenströme I_{U}, I_{V}, I_{W} abgeschaltet, damit sich diese nicht (weiter) vergrößern. Eine Gefahr eines Fehlerstroms besteht tendenziell bei den kleinen bis mittleren Drehzahlen (~ 1 bis 3000 U/min) und bei gleichzeitig hohen erforderlichen Drehmomenten. Um Fehlerströme zu erkennen bzw. zu überwachen, kann eine Shuntmessung erfolgen.

Wird ein Fehlerstrom erkannt, kann ein (dreipoliger) Phasenkurzschluss erfolgen, indem die Klemmspannungen bzw. Phasenspannung U_{U}, U_{V}, U_{W} auf gemeinsames Potential gezogen werden. Energie, die sich im Motor befindet, baut sich dann von selbst ab. Alternativ oder - insbesondere vorher oder hinterher - zusätzlich kann die Zwischenkreisspannung U_{Z} mit der PFC-Schaltung 42 abgesenkt werden, woraufhin eine Rückspeisung von Energie vom Elektromotor 1 in den Zwischenkreis Z erfolgen kann, um eine Bremswirkung zu erzeugen.

Es ist besonders bevorzugt, dass der Elektromotor 1 der Küchenmaschine 100 nur 10 bis 60 %, insbesondere 20 bis 40 %, des insgesamt verfügbaren bzw. einstellbaren Drehzahlbereichs des Elektromotors 1 bzw. Rührers 121 im Ankerstellbereich und im Übrigen im Feldschwächbereich betrieben wird.

Der Feldschwächbereich, in dem der Elektromotor 1 entsprechend bevorzugt 40 bis 80 %, insbesondere 50 bis 70 %, des insgesamt verfügbaren bzw. einstellbaren Drehzahlbereichs des Elektromotors 1 bzw. Rührers 121 der Küchenmaschine betrieben wird oder betreibbar ist, teilt sich in den ersten Feldschwächbereich und den zweiten Feldschwächbereich auf.

Insbesondere beträgt das Verhältnis (etwa) 20 % bis 50 % Ankerstellbereich (constant torque area) zu 50 % bis 80 % Feldschwächbereich (constant power area). Es ist hierbei bevorzugt, dass ein Betrieb des Elektromotors 1 jedenfalls auch im zweiten Feldschwächbereich erfolgt.

Auf den insgesamt verfügbaren bzw. einstellbaren Drehzahlbereich (einschließlich Ankerstellbereich) bezogen erfolgt der Betrieb im ersten Feldschwächbereich vorzugsweise zu 10 bis 30 %, insbesondere 15 bis 25 %, und/oder im zweiten Feldschwächbereich vorzugsweise zu 40 bis 80 %, insbesondere zu 50 bis 70 %.

Vorzugsweise ist/wird der Elektromotor 1 bis zur Nenndrehzahl, insbesondere bis höchstens 2500 U/min oder bis höchstens 1500 U/min, im Ankerstellbereich betreibbar/betrieben. Bei darüberhinausgehenden Drehzahlen ist/wird der Elektromotor 1 vorzugsweise im Feldschwächbereich betreibbar/betrieben, besonders bevorzugt mit Drehzahlen bis zu 10.000, 12.000 oder 15.000 U/min oder mehr.

Vorzugsweise ist/wird der Elektromotor 1 (oberhalb der Nenndrehzahl) bei Drehzahlen bis höchstens 5000 U/min, insbesondere bis höchstens 3500 U/min, im ersten Feldschwächbereich betreibbar/betrieben. Bei darüberhinausgehenden Drehzahlen ist/wird der Elektromotor 1 vorzugsweise im zweiten Feldschwächbereich betreibbar/betrieben, besonders bevorzugt mit Drehzahlen bis zu 10.000, 12.000 oder 15.000 U/min oder mehr.

Es wird vorzugsweise ein vektorbasiertes Regelungsverfahren eingesetzt, um den Elektromotor 1 in der Küchenmaschine 100 zu betreiben, insbesondere wie im Zusammenhang mit Fig. 1 erläutert.

Die Eingangsspannung bzw. Zwischenkreisspannung U_{Z} kann zur Reduktion des Spannungshubs und damit der maximal möglichen Stellgröße (insbesondere der Phasenströme I_{U}, I_{V}, I_{W} und/oder Phasenspannungen U_{U}, U_{V}, U_{W}) reduziert werden. Hierzu kann die PFC Schaltung 42 bewusst ausgeschaltet werden, insbesondere bei kleinen Drehzahlen bzw. im Ankerstellbereich.

Es können eine oder mehrere sequenziell ausgewertete Shuntmessungen (im vorhandenen Antriebssystem drei Shunts) zur Vermeidung einer (dreisträngigen) Strangstrommessung eingesetzt werden, um das Sensorsignal 43 zu bilden bzw. den Elektromotor 1 zu regeln.

Der Elektromotor 1 und/oder die Motorregelung 40 weisen, insbesondere im Gegensatz zum Einsatz von SR-Motoren, vorzugsweise keine feldorientierte Regelung, eine stabile Regelbarkeit der Drehzahlstufen und/oder ein stetiges Regelverfahren, bei dem das Regelverfahren durchgängig läuft (kontinuierlich bzw. stetig ist), auf.

Durch die beschriebenen Maßnahmen kann eine hohe Drehzahlspreizung in einer Küchenmaschine (z.B. +/- 1-12.000 U/min) erreicht werden. Hierbei ist der Elektromotor 1 leiser, bietet eine höhere Laufruhe, geringere Drehmomentschwankungen und ein Getriebe in der Küchenmaschine 100 ist nicht erforderlich (Kosten und Materialeinsparung). Das Antriebssystem der Küchenmaschine 100 wird auch robuster. Es kann ein stufenloser Betrieb ermöglicht werden.

Alternativ oder zusätzlich vorgesehene diskrete Drehzahl-Stufen können umkonfiguriert bzw. umprogrammiert werden. Akustikprobleme und mechanische Schäden durch Schwingungen können vermieden werden. Drehmomentschwankungen aufgrund unstetiger Ansteuerverfahren werden vermieden. Schließlich tragen die vorschlagsgemäßen Aspekte zu reproduzierbaren Knet-, Rühr-, Pürier- und/oder Kochergebnissen - unter Vermeidung von Beeinflussungen des Lebensmittels bzw. Gargutes bedingt durch das Ansteuerverfahren des Elektromotors 1 - bei.

Einzelne Aspekte, Merkmale und/oder Verfahrensschritte der vorliegenden Erfindung können unabhängig, aber auch in unterschiedlichen Kombinationen und/oder Reihenfolgen realisiert werden.

### Bezugszeichenliste:

| | | | |
|---|---|---|---|
| 1 | Elektromotor | PWM | PWM-Schaltung |
| | | Q₁ | Schalter |
| 10 | Stator | Q₂ | Schalter |
| 11 | Spule | | |
| 12 | Statorkern | R₁ | Widerstand |
| 12A | Statorblech | R₂ | Widerstand |
| 13 | Spulenträger | R₃ | Widerstand |
| 14 | Anschlusseinrichtung | R₄ | Widerstand |
| 14A | Kontakt/Klemme | R₅ | Widerstand |
| 14B | Sternpunkt | | |
| | | RF | Gleichrichter |
| 15 | Statorschlitz | R_{S} | Shunt-Widerstand |
| 16 | Spannungskomponente | ST | Spannungsteiler |
| | | V₁ | Komparator |
| 20 | Rotor | V₂ | Komparator |
| 21 | Permanentmagnet | X | Multiplizierer / Multiplikator |
| 22 | Rotorkern | | |
| 22A | Rotorblech | U_{AC} | Netzspannung |
| 22B | Sektorabschnitt | U_{P1} | Rückkoppelgröße |
| 23 | Welle | U_{P2} | Fehlersignal |
| | | U_{P3} | Spannung |
| 30 | Lüfter | U_{P4} | Spannung |
| | | U_{P5} | Regeleingangsgröße |
| 40 | Motorregler | U_{IN} | pulsierenden Gleichspannung |
| 41 | Wechselrichter | U_{CTRL} | Steuersignal |
| 42 | PFC-Schaltung | U_{PWM} | PWM-Signal |
| 43 | Sensorsignal | U_{REF} | Referenzspannung |
| 100 | Küchenmaschine | I_{REF} | Stromreferenzwert |
| 110 | Basisstation | U | Phase |
| 111 | Aufnahme | V | Phase |
| 112 | Stromversorgung | W | Phase |
| 113 | Benutzerschnittstelle | Z | Zwischenkreis |
| 120 | Gefäß | I_{U} | Phasenstrom Phase U |
| 121 | Rührer | I_{V} | Phasenstrom Phase V |
| A | Rotationsachse | I_{W} | Phasenstrom Phase W |
| C₀ | Kondensator | U_{U} | Phasenspannung Phase U |
| D_{P} | Diode | U_{V} | Phasenspannung Phase V |
| L | Induktivität | U_{W} | Phasenspannung Phase W |
| M | Mittelabgriff | U_{Z} | Zwischenkreisspannung |
| PC | PFC Controller | | |

## Patentansprüche

1. Verfahren zum Betreiben einer Küchenmaschine (100), wobei die Küchenmaschine (100) einen Elektromotor (1), insbesondere einen BLDC-Motor oder elektrisch kommutierten, permanenterregten Synchronmotor, und einen Motorregler (40) zur Regelung des Elektromotors (1), insbesondere seiner Rotordrehzahl oder Rotorposition, aufweist,
**dadurch gekennzeichnet,**
**dass** eine Zwischenkreisspannung (U_{Z}) für den Betrieb des Elektromotors (1) mit einer PFC-Schaltung (42) bereitgestellt wird.

2. Verfahren nach Anspruch 1, **dadurch gekennzeichnet, dass** die Zwischenkreisspannung (U_{Z}) durch Einstellung der PFC-Schaltung (42) verändert wird, vorzugsweise wobei die PFC-Schaltung (42) rückgekoppelt ist und die Zwischenkreisspannung (U_{Z}) verändert wird, indem die Rückkopplung beeinflusst wird.

3. Verfahren nach Anspruch 2, **dadurch gekennzeichnet, dass** die Zwischenkreisspannung (U_{Z}) durch die PFC-Schaltung (42) geregelt wird, wobei die Regelung auf einer von der Zwischenkreisspannung (U_{Z}) abgeleiteten Rückkoppelgröße (U_{P1}) basiert und wobei die Zwischenkreisspannung (U_{Z}) durch Beeinflussung der Rückkoppelgröße (U_{P1}) der PFC-Schaltung (42) verändert wird.

4. Verfahren nach Anspruch 3, **dadurch gekennzeichnet, dass** die PFC-Schaltung (42) eine PWM-Schaltung (PWM) zur Erzeugung der Zwischenkreisspannung (U_{Z}) aufweist, wobei die Zwischenkreisspannung (U_{Z}) zu einem Tastverhältnis der PWM-Schaltung (PWM) korrespondiert, und wobei das Tastverhältnis der PWM-Schaltung (PWM) mit der Rückkoppelgröße (U_{P1}) geregelt wird, die vom Verlauf der Zwischenkreisspannung (U_{Z}) geprägt ist und deren Mittelwert eingestellt oder verändert wird, vorzugsweise während eine Trägerfrequenz der PWM-Schaltung (PWM) unverändert bleibt.

5. Verfahren nach Anspruch 3 oder 4, **dadurch gekennzeichnet, dass** die Rückkoppelgröße (U_{P1}) durch Teilen der Zwischenkreisspannung (U_{Z}) mit einem einstellbaren Faktor erzeugt wird und durch eine Veränderung des Faktors die Zwischenkreisspannung (U_{Z}) eingestellt oder verändert wird.

6. Verfahren nach Anspruch 5, **dadurch gekennzeichnet, dass** das Verhältnis von Widerständen eines Spannungsteilers (ST) verändert wird, vorzugsweise wobei der Spannungsteiler (ST) zwei in Reihe geschaltete Widerstände (R₁, R₂) aufweist, über die die Zwischenkreisspannung (U_{Z}) abfällt, sodass sich an einem Mittelabgriff (M) des Spannungsteilers (ST) eine in einem Verhältnis geteilte Zwischenkreisspannung (U_{Z}) als Rückkoppelgröße (U_{P1}) für die PFC-Schaltung (42) einstellt, wobei der Spannungsteiler (ST) eine Reihenschaltung eines Schalters (Q₂) mit einem weiteren Widerstand (R₃) aufweist, die mit dem Spannungsteiler (ST) so gekoppelt ist, dass durch Schließen des Schalters (Q₂) das Verhältnis geändert wird, vorzugsweise wobei der Schalter (Q₂) durch einen Transistor, insbesondere MOSFET, realisiert ist.

7. Verfahren nach einem der Ansprüche 3 bis 6, **dadurch gekennzeichnet, dass** bei niedrigen Drehzahlen des Elektromotors (1) eine Regeleingangsgröße (U_{P5}) von der Zwischenkreisspannung (U_{Z}) unabhängig ist und/oder als Referenzgröße fest vorgegeben wird.

8. Verfahren nach einem der voranstehenden Ansprüche, **dadurch gekennzeichnet, dass** die PFC-Schaltung (42) einen Hochsetzsteller, insbesondere Boost-Converter, einen Buck-Converter oder einen Buck-Boost-Converter, aufweist oder bildet, mit dem die Zwischenkreisspannung (U_{Z}) erzeugt wird.

9. Verfahren nach einem der voranstehenden Ansprüche, **dadurch gekennzeichnet, dass** ein von dem Antrieb abgedecktes Drehzahlspektrum durch die Einstellung der PFC-Schaltung (42) geändert wird, vorzugsweise wobei durch die Änderung der Einstellung der PFC-Schaltung (42) verringerte Minimalwerte und/oder vergrößerte Maximalwerte einer oder mehrerer mit der Zwischenkreisspannung (U_{Z}) gebildeter Spannungen und/oder Ströme zur Versorgung des Elektromotors (1) ermöglicht werden.

10. Verfahren nach einem der voranstehenden Ansprüche, **dadurch gekennzeichnet, dass** die PFC-Schaltung (42) in Abhängigkeit von einem Soll-Betriebsparameter, insbesondere einer Soll-Drehzahl, automatisch unterschiedlich eingestellt wird, vorzugsweise wobei bei Verringerung der Soll-Drehzahl die PFC-Schaltung (42) automatisch so eingestellt wird, dass eine Reduktion der Zwischenkreisspannung (U_{Z}) bewirkt wird.

11. Verfahren nach einem der voranstehenden Ansprüche, **dadurch gekennzeichnet, dass** die PFC-Schaltung (42) in Abhängigkeit von einem Rezept, einem Betriebsmodus, einem Betriebsparameter, einer Benutzereingabe, einem Vorhandensein oder einer Bauform eines Zubereitungsgefäßes (120), einem Vorhandensein oder einer Erkennung eines Zubehörteils und/oder einem Vorhandensein und/oder einer Aktivität eines Funktionsmoduls der Küchenmaschine (100) unterschiedlich eingestellt wird.

12. Verfahren nach einem der voranstehenden Ansprüche, **dadurch gekennzeichnet, dass** eine Rückspeisung von aus Rotationsenergie des Elektromotors (1) gewonnener elektrischer Energie in einen durch den Ausgang der PFC-Schaltung (42) gebildeten Zwischenkreis (Z) erfolgt, nachdem durch Einstellung der PFC-Schaltung (42) die Zwischenkreisspannung (U_{Z}) des Zwischenkreises (Z) gesenkt worden ist.

13. Antrieb für ein Rührwerk einer elektrisch betriebenen Küchenmaschine (100), wobei der Antrieb einen Elektromotor (1) und einen Motorregler (40) zur Regelung des Elektromotors (1), insbesondere seiner Rotordrehzahl oder Rotorposition, aufweist, wobei der Antrieb zur Durchführung des Verfahrens nach einem der voranstehenden Ansprüche ausgebildet ist.

14. Küchenmaschine (100) aufweisend ein mit dem Antrieb gemäß Anspruch 13 angetriebenes Rührwerk.

15. Computerprogrammprodukt umfassend Befehle, die bewirken, dass der Antrieb gemäß Anspruch 13 oder die Küchenmaschine (100) gemäß Anspruch 14 das Verfahren nach einem der Ansprüche 1 bis 12 ausführen.
